# EUROPEAN PATENT APPLICATION

(11) **EP 4 852 593 A1**
(43) Date of publication of application: **09.12.2026**
(21) Application number: 24922049.2
(22) Date of filing: 18.12.2024
(51) Int. Cl.: H04W 72/566, H04W 28/06, H04W 72/1268

(54) **TERMINAL DEVICE, METHOD FOR TERMINAL DEVICE, AND BASE STATION DEVICE**

(30) Priority: 30.01.2024 JP 2024011495
(71) Applicant: DENSO CORPORATION, Kariya-city, Aichi 448-8661 (JP)
(72) Inventor: NAGANO, Tatsuki, Kariya- city, Aichi 4488661 (JP)
(74) Representative: TBK
(86) International application number: PCT/JP2024/044770
(87) International publication number: WO 2025/164131

(57) **Abstract**

A terminal apparatus (10) includes a receiver (122) configured to receive, from a base station apparatus (20), a radio resource control (RRC) message including first information for configuring a priority for a logical channel (LCH), and a controller (110) configured to perform a logical channel prioritization (LCP) procedure, in which the controller is configured to determine the priority for the LCH, based on either of the first information or second information for configuring the priority for the LCH, according to a threshold for a certain timer.

## Description

### Cross-Reference To Related Application

The present application is based on and claims the benefit of priority to Japanese Patent Application No. 2024-011495 filed on January 30, 2024, the contents of which are incorporated herein by reference in its entirety.

### Technical Field

The present disclosure relates to a terminal apparatus, a method of a terminal apparatus, and a base station apparatus.

### Background

In recent years, a technology of extended reality (XR) has been developed. XR is a concept including multi-media integration technologies, such as virtual reality (VR), augmented reality (AR), mixed reality (MR), and substitutional reality (SR). In XR, three-dimensional time series image data in a real space and/or a virtual space, audio data of a plurality of channels (stereo, 5.1ch or the like), other data presented to a user, control data, and the like are transmitted and received in parallel. XR requires low latency and high reliability in order to maintain and enhance quality of experience of users.

NPL 1 and NPL 2 describe technical specifications defined by the Third Generation Partnership Project (3GPP (registered trademark)) and include technical specifications for supporting XR.

### Citation List

### Non Patent Literature

[NPL 1] 3GPP TS 38.321 V18.0.0 (2023-12)
[NPL 2] 3GPP TS 38.331 V18.0.0 (2023-12)
[NPL 3] 3GPP TS 26.522 V0.1.0 (2023-05)

### SUMMARY

NPL 1 describes a logical channel prioritization (LCP) procedure. The LCP procedure is processing for multiplexing data from a plurality of different logical channels (LCHs).

Meanwhile, XR is operated under various requirements including a low latency requirement. NPL 1 and NPL 2 describe technical specifications in consideration of the above requirements but include no enhancement for a specification of the LCP procedure. The inventor has found an issue that resources are not appropriately allocated to given certain data (for example, data having been delayed), and as a result, the data may be discarded. Note that the issue also occurs in a general terminal apparatus and a general base station apparatus other than those with XR implementation.

The present disclosure provides a technique that enables appropriate allocation of resources to LCH data in an LCP procedure.

A terminal apparatus according to the present disclosure includes a receiver configured to receive, from a base station apparatus, a radio resource control (RRC) message including first information for configuring a priority for a logical channel (LCH), and a controller configured to perform a logical channel prioritization (LCP) procedure. The controller is configured to determine the priority for the LCH, based on either of the first information or second information for configuring the priority for the LCH, according to a threshold for a certain timer.

Further, a method for a terminal apparatus according to the present disclosure includes receiving, from a base station apparatus, a radio resource control (RRC) message including first information for configuring a priority for a logical channel (LCH), and performing a logical channel prioritization (LCP) procedure. The performing the LCP procedure includes determining the priority for the LCH, based on either of the first information or second information for configuring the priority for the LCH, according to a threshold for a certain timer.

Furthermore, a base station apparatus according to the present disclosure includes a transmitter configured to transmit, to a terminal apparatus, a radio resource control (RRC) message including first information for configuring a priority for a logical channel (LCH). In a logical channel prioritization (LCP) procedure, the priority for the LCH is determined based on either of the first information or second information for configuring the priority for the LCH, according to a threshold for a certain timer.

According to the above configuration, it is possible to appropriately allocate resources to LCH data in an LCP procedure. Note that the configurations above may exert, instead of or together with the above advantageous effects, other advantageous effects.

### BRIEF DESCRIPTION OF THE DRAWINGS

The above and other objects, features, and advantages of the present disclosure will become more apparent in the following detailed description with reference to the accompanying drawings. The drawings are as follows:
FIG. 1 is a diagram illustrating a communication system S;
FIG. 2 is a diagram illustrating a U-plane protocol stack;
FIG. 3 is a diagram illustrating a C-plane protocol stack;
FIG. 4 is a block diagram illustrating a schematic hardware configuration of a terminal apparatus 10;
FIG. 5 is a block diagram illustrating a schematic functional configuration of the terminal apparatus 10;
FIG. 6 is a block diagram illustrating a schematic hardware configuration of a base station apparatus 20;
FIG. 7 is a block diagram illustrating a schematic functional configuration of the base station apparatus 20;
FIG. 8 is a diagram illustrating a radio frame configuration;
FIG. 9 is a diagram illustrating a configuration of short buffer status reporting (BSR);
FIG. 10 is a diagram illustrating a configuration of Long BSR;
FIG. 11 is a diagram illustrating an example of a BSR table (i.e., a first table);
FIG. 12 is a diagram illustrating an example of an additional BSR table (i.e., a second table);
FIG. 13 is a diagram illustrating a configuration of Refined Long BSR;
FIG. 14 is a sequence diagram illustrating a flow of processing of the terminal apparatus 10 and the base station apparatus 20;
FIG. 15 is a diagram illustrating a configuration of Delay Status Reporting;
FIG. 16 is a sequence diagram illustrating a flow of processing of the terminal apparatus 10 and the base station apparatus 20;
FIG. 17 is a diagram illustrating a configuration of a PSI-based SDU discard activation/deactivation MAC CE;
FIG. 18 is a diagram for explaining an example of a PSI-based discard processing;
FIG. 19 is a diagram for explaining an example of a flow of processing of an LCP procedure;
FIG. 20 is a diagram for explaining an example of selection from first priority information and second priority information;
FIG. 21 is an example that a priority order changes, based on a certain condition;
FIG. 22 is an example of a mapping restriction based on a certain condition;
FIG. 23 is an example of a mapping restriction based on a certain condition;
FIG. 24 is an example of a mapping restriction based on a certain condition;
FIG. 25 is an example of a mapping restriction based on a certain condition; and
FIG. 26 is a diagram for explaining an example of a flow of processing of an LCP procedure.

### DETAILED DESCRIPTION

Hereinafter, embodiments of the present disclosure will be described in detail with reference to the accompanying drawings. Note that, in the Specification and drawings, elements to which similar descriptions are applicable are denoted by the same reference signs, and overlapping descriptions may hence be omitted.

Each embodiment described below is merely an example of a configuration that can implement the present disclosure. Each embodiment described below can be appropriately modified or changed according to a configuration of an apparatus to which the present disclosure is applied and various conditions. All of combinations of elements included in each embodiment described below are not necessarily required to implement the present disclosure, and a part of the elements can be appropriately omitted. Hence, the scope of the present disclosure is not limited by the configuration described in each embodiment described below. Configurations in which a plurality of configurations described in the embodiments below are combined can also be employed as long as the configurations are not inconsistent with each other.

### 1. First Embodiment

### 1.1. Communication System

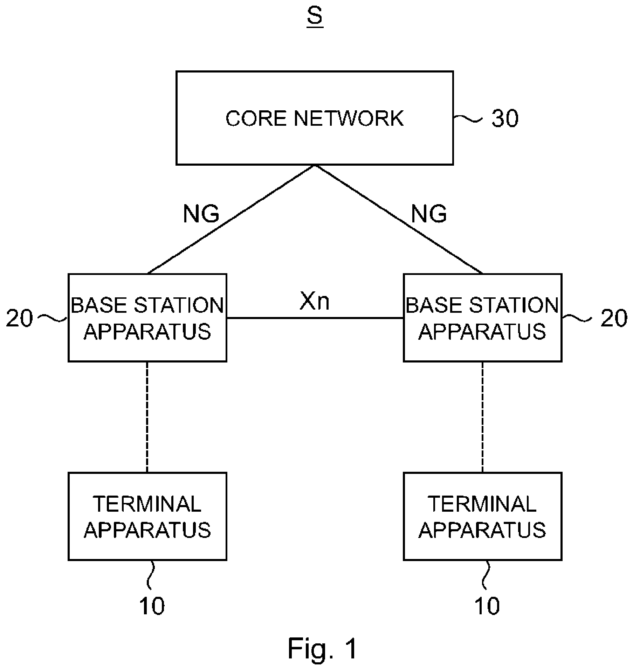

As illustrated in FIG. 1, a communication system S includes one or more terminal apparatuses 10, one or more base station apparatuses 20, and a core network 30. The communication system S is configured in accordance with certain technical specifications. For example, the communication system S may be compliant with technical specifications defined by 3GPP (for example, 5G, 5G advanced, 6G, or the like).

In the communication system S, a user plane in which user data is transmitted and received and a control plane in which control data is transmitted and received are separately configured. In other words, the communication system S supports C/U split. The user plane is abbreviated to the U plane, and the control plane is abbreviated to the C plane.

The terminal apparatus 10 may be a device that performs radio communication with the base station apparatus 20, and may be, for example, a user equipment (UE) that operates in accordance with 5G NR technical specifications of 3GPP. The terminal apparatus 10 may be an apparatus that is compliant with other older or newer 3GPP technical specifications.

The terminal apparatus 10 may be, for example, a mobile phone terminal such as a smartphone, a tablet terminal, a notebook PC, a communication module, a communication card, or an IoT device such as a surveillance camera and a robot. The terminal apparatus 10 may be a vehicle (for example, a car, a train, or the like), or an apparatus mounted on the vehicle. The terminal apparatus 10 may be a transport machine body other than the vehicle (for example, a ship, an airplane, or the like), or an apparatus mounted on the transport machine body. The terminal apparatus 10 may be a sensor, or an apparatus provided with the sensor. Note that the terminal apparatus 10 may be referred to as another name such as a terminal, a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, and a remote unit. The terminal apparatus 10 is preferably an apparatus adapted to one or more of enhanced mobile broadband (eMBB), ultra-reliable and low-latency communications (URLLC), and massive machine type communications (mMTC).

The base station apparatus 20 manages at least one cell. The cell configures a minimum unit of a communication area. For example, one cell belongs to one frequency (for example, carrier frequency), and is configured with one component carrier. The term "cell" may represent radio communication resources, and may represent a communication target of the terminal apparatus 10. The base station apparatus 20 performs radio communication with the terminal apparatus 10 existing in the cell of the base station apparatus 20 in the U plane and the C plane. In other words, the base station apparatus 20 terminates a U plane protocol and a C plane protocol for the terminal apparatus 10.

The base station apparatus 20 communicates with the core network 30 in the U plane and the C plane. More specifically, the core network 30 includes a plurality of logical nodes including an Access and Mobility Management Function (AMF) and a User Plane Function (UPF). The base station apparatus 20 connects to the AMF in the C plane, and connects to the UPF in the U plane.

The base station apparatus 20 may be a gNB that provides the terminal apparatus 10 with the U plane and the C plane conforming to 5G New Radio (NR) technical specifications of 3GPP and connects to a 5G core network (5GC) of 3GPP, for example. The base station apparatus 20 may be an apparatus conforming to other older or newer technical specifications of 3GPP.

The base station apparatus 20 may be configured by a plurality of unit apparatuses. For example, the base station apparatus 20 may include a central unit (CU), a distributed unit (DU), and a radio unit (RU).

With a configuration in which a plurality of base station apparatuses 20 are connected to each other, a radio access network (RAN) is formed. The radio access network formed by the base station apparatus 20 being a gNB may be referred to as an NG-RAN. The base station apparatus 20 being a gNB may be referred to as an NG-RAN node.

The plurality of base station apparatuses 20 are connected to each other by a certain interface (for example, an Xn interface). More specifically, for example, the plurality of base station apparatuses 20 are connected to each other by an Xn-U interface in the U plane, and are connected to each other by an Xn-C interface in the C plane. Note that the plurality of base station apparatuses 20 may be connected to each other by another interface having a different function and name.

Each base station apparatus 20 is connected to the core network 30 by a certain interface (for example, an NG interface). More specifically, for example, each base station apparatus 20 is connected to the UPF of the core network 30 by an NG-U interface in the U plane, and is connected to the AMF of the core network 30 by an NG-C interface in the C plane. Note that each base station apparatus 20 may be connected to the core network 30 by another interface having a different function and name.

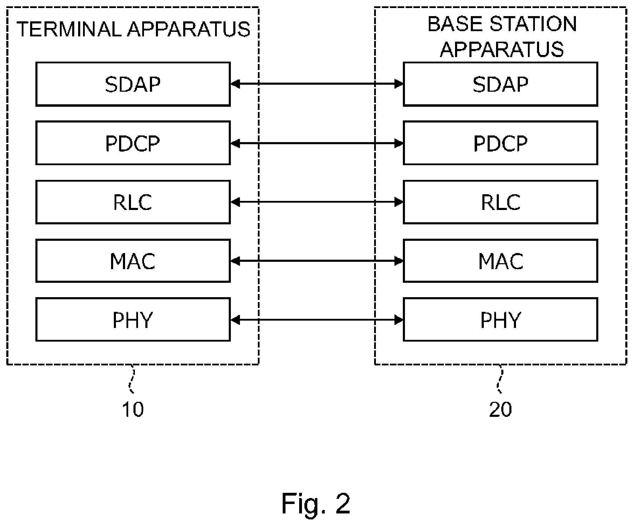

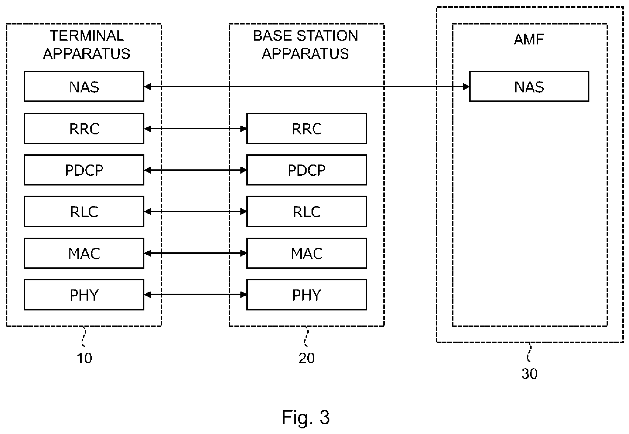

With reference to FIG. 2, a radio protocol architecture between the terminal apparatus 10 and the base station apparatus 20 will be described. With reference to FIG. 3, radio protocol architectures between the terminal apparatus 10 and the base station apparatus 20 and between the terminal apparatus 10 and the core network 30 will be described.

As illustrated in FIG. 2, a protocol stack in the U plane is provided with, in order from the lowest layer, a Physical (PHY) layer, a Media Access Control (MAC) layer, a Radio Link Control (RLC) layer, a Packet Data Convergence Protocol (PDCP) layer, and a Service Data Adaptation Protocol (SDAP) layer. Each of the layers is terminated in the base station apparatus 20 on the network side. The MAC layer is also referred to as "Medium Access Control layer."

As illustrated in FIG. 3, a protocol stack in the C plane is provided with, in order from the lowest layer, a Physical (PHY) layer, a Media Access Control (MAC) layer, a Radio Link Control (RLC) layer, a Packet Data Convergence Protocol (PDCP) layer, a Radio Resource Control (RRC) layer, and a Non-Access Stratum (NAS). The MAC layer is also referred to as "Medium Access Control layer." Each of the layers, except the Non-Access Stratum, is terminated in the base station apparatus 20 on the network side. The Non-Access Stratum is terminated in the AMF of the core network 30 on the network side.

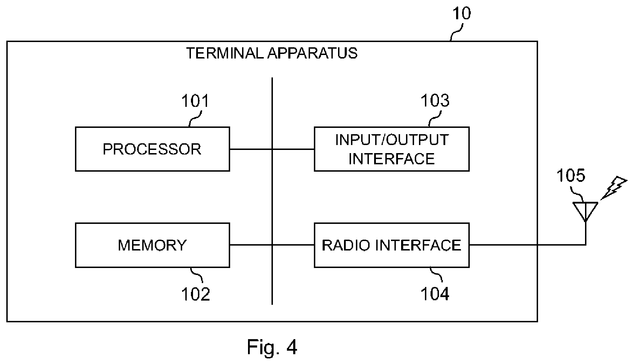

As illustrated in FIG. 4, the terminal apparatus 10 includes, as hardware elements, a processor 101, a memory 102, an input/output interface 103, a radio interface 104, and an antenna 105. The above elements provided in the terminal apparatus 10 are connected to each other via an internal bus. Note that the terminal apparatus 10 may include a hardware element other than the elements illustrated in FIG. 4.

The processor 101 is an arithmetic element that implements various functions of the terminal apparatus 10. The processor 101 may be a central processing unit (CPU), a graphics processing unit (GPU), and a system-on-a-chip (SoC) including an element such as a memory controller.

The memory 102 includes at least one storage medium, such as a random access memory (RAM) and an embedded multi media card (eMMC). The memory 102 is an element that temporarily or permanently stores a program and data used to execute various types of processing in the terminal apparatus 10. The program includes one or more instructions for operations of the terminal apparatus 10. The processor 101 deploys the program stored in the memory 102 into the memory 102 itself and/or a system memory (not illustrated), and executes the program to thereby implement the functions of the terminal apparatus 10.

The input/output interface 103 is an interface that receives an operation to the terminal apparatus 10 and supplies the operation to the processor 101, and presents various pieces of information to a user. The input/output interface 103 is a touch panel, for example.

The radio interface 104 is a circuit that executes various types of signal processing for implementing radio communication, and includes a baseband processor and an RF circuit. The radio interface 104 transmits and receives a radio signal to and from the base station apparatus 20 via the antenna 105.

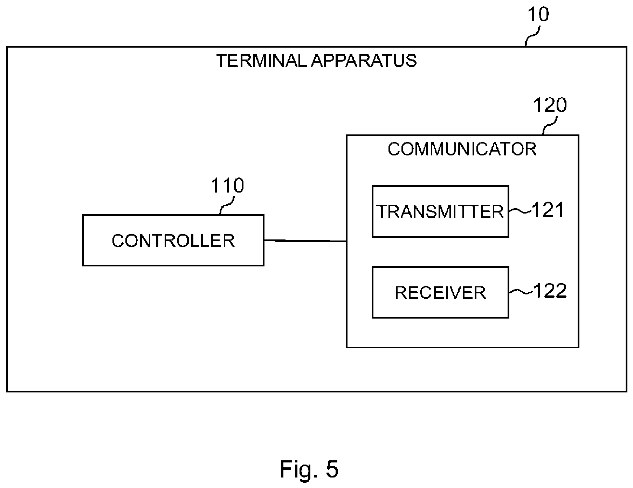

As illustrated in FIG. 5, the terminal apparatus 10 includes, as functional blocks, a controller 110 and a communicator 120. The communicator 120 includes at least one transmitter 121 and at least one receiver 122.

The controller 110 may include at least one processor 101 and at least one memory 102. In other words, the controller 110 may be implemented by the processor 101 and the memory 102. The controller 110 executes various types of control processing in the terminal apparatus 10. For example, the controller 110 controls radio communication with the base station apparatus 20 via the communicator 120. In other words, the controller 110 performs, via the communicator 120, transmission/reception of data/information/message.

The communicator 120 includes the radio interface 104 and the antenna 105. In other words, the communicator 120 is implemented by the radio interface 104 and the antenna 105. The communicator 120 transmits and receives a radio signal to and from the base station apparatus 20, and thereby performs radio communication with the base station apparatus 20. The communicator 120 may include two or more radio interfaces 104 and two or more antennas 105.

When the controller 110 operates, the various types of processing of the terminal apparatus 10 are executed.

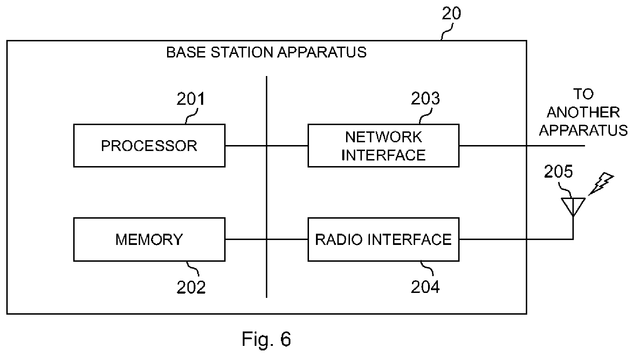

As illustrated in FIG. 6, the base station apparatus 20 includes, as hardware elements, a processor 201, a memory 202, a network interface 203, a radio interface 204, and an antenna 205. The above elements provided in the base station apparatus 20 are connected to each other via an internal bus. Note that the base station apparatus 20 may include a hardware element other than the elements illustrated in FIG. 6.

The processor 201 is an arithmetic element that implements various functions of the base station apparatus 20. The processor 201 may be a CPU, and may further include another processor such as a GPU.

The memory 202 includes at least one storage medium, such as a read only memory (ROM), a RAM, a hard disk drive (HDD), and a solid state drive (SSD). The memory 202 is an element that temporarily or permanently stores a program and data used to execute various types of processing in the base station apparatus 20. The program includes one or more instructions for operations of the base station apparatus 20. The processor 201 deploys the program stored in the memory 202 into the memory 202 itself and/or a system memory (not illustrated), and executes the program to thereby implement the functions of the base station apparatus 20.

The network interface 203 is an interface used to transmit and receive a signal to and from another base station apparatus 20 and the core network 30.

The radio interface 204 is a circuit that executes various types of signal processing for implementing radio communication, and includes a baseband processor and an RF circuit. The radio interface 204 transmits and receives a radio signal to and from the terminal apparatus 10 via the antenna 205.

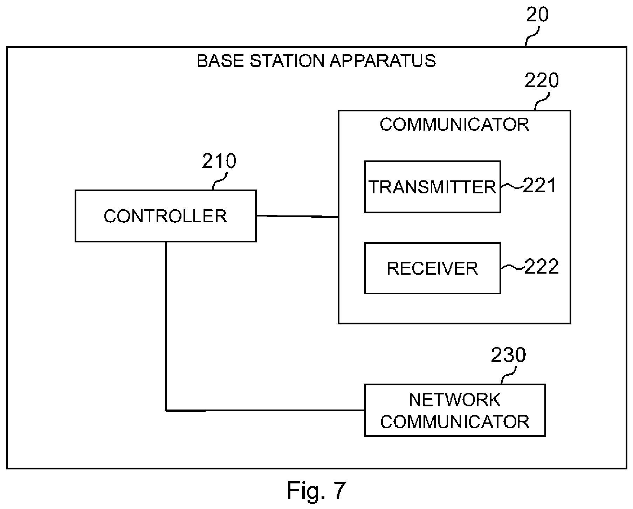

As illustrated in FIG. 7, the base station apparatus 20 includes, as functional blocks, a controller 210, a communicator 220, and a network communicator 230. The communicator 220 includes at least one transmitter 221 and at least one receiver 222.

The controller 210 may include at least one processor 201 and at least one memory 202. In other words, the controller 210 may be implemented by the processor 201 and the memory 202. The controller 210 executes various types of control processing in the base station apparatus 20. For example, the controller 210 controls radio communication with the terminal apparatus 10 via the communicator 220. In other words, the controller 210 performs, via the communicator 220, transmission/reception of data/information/message. For example, the controller 210 controls communication with another node (for example, another base station apparatus 20, a node of the core network 30) via the network communicator 230.

The communicator 220 includes the radio interface 204 and the antenna 205. In other words, the communicator 220 is implemented by the radio interface 204 and the antenna 205. The communicator 220 transmits and receives a radio signal to and from the terminal apparatus 10, and thereby performs radio communication with the terminal apparatus 10. The communicator 220 may include two or more radio interfaces 204 and two or more antennas 205.

The network communicator 230 includes the network interface 203. In other words, the network communicator 230 is implemented by the network interface 203. The network interface 203 transmits and receives a signal to and from the network (ultimately, another node described above).

When the controller 210 operates, the various types of processing of the base station apparatus 20 are executed.

### 1.2. Radio Resources

The terminal apparatus 10 and the base station apparatus 20 perform radio communication with each other, using radio resources in the frequency domain and the time domain. The radio resources will be described below.

A transmission method of downlink communication from the base station apparatus 20 to the terminal apparatus 10 is, for example, orthogonal frequency division multiplexing (OFDM) using a cyclic prefix (CP), that is, CP-OFDM. A transmission method of uplink communication from the terminal apparatus 10 to the base station apparatus 20 is, for example, CP-OFDM described above, or DFTS-OFDM in which CP-OFDM is applied subsequently to transform precoding for performing discrete Fourier transform (DFT) spreading.

The cyclic prefix is a redundant signal that functions as a guard period (GP) for preventing inter-symbol interference and inter-carrier interference, and is inserted at the start of an OFDM symbol. Types of the cyclic prefix include a normal cyclic prefix and an extended cyclic prefix.

As the radio resources in the frequency domain of OFDM, a plurality of subcarriers being orthogonal to each other are used. The plurality of subcarriers are allocated with a certain subcarrier spacing (sub-carrier spacing (SCS)) Δf in the frequency domain. In the communication system S, a plurality of subcarrier spacings Δf may be applied. The subcarrier spacing Δf is expressed by the following expression, for example. $Δf = {2}^{μ} ⋅ 15 \left[kHz\right]$

Here, µ is an integer of 0 or greater, and may be any one of values of 0, 1, 2, 3, 4, 5, and 6. Accordingly, the subcarrier spacing Δf [kHz] may be any one of values of 15, 30, 60, 120, 240, 480, and 960. Note that µ may be a value of 7 or greater.

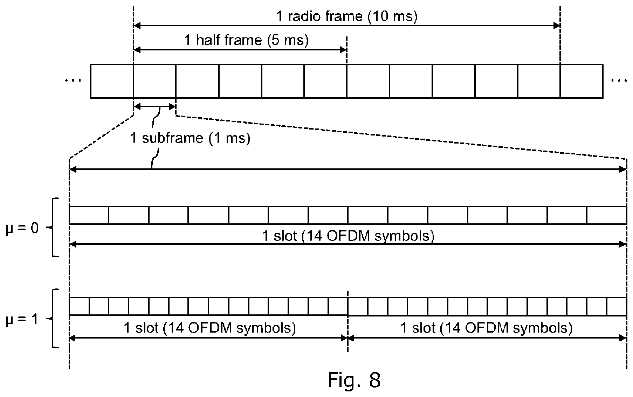

In the time domain of OFDM, as illustrated in FIG. 8, a hierarchical radio frame configuration is used. One radio frame includes 10 subframes. The subframes are numbered with subframe numbers counting up from 0 to 9 by one. One radio frame is divided into two half frames. A time length of the radio frame is 10 ms, a time length of the half frame is 5 ms, and a time length of the subframe is 1 ms. The above time lengths are not dependent upon the subcarrier spacing Δf.

One subframe includes one or more slots. The number Ns of slots included in one subframe is dependent upon the value of µ described above, ultimately the subcarrier spacing Δf. The number Ns of slots is expressed by the following expression, for example. $Ns = {2}^{μ}$

One slot includes a plurality of symbols. The number of symbols included in one slot is dependent upon the type of cyclic prefix. For example, in a configuration in which the normal cyclic prefix is used, one slot includes 14 symbols. For example, in a configuration in which the extended cyclic prefix is used, one slot includes 12 symbols.

As described above, the number of slots and the number of symbols included in each of the radio frame, the half frame, and the subframe having a fixed time length are variable. Accordingly, the time length of the slot and the time length of the symbol are also variable.

A resource element (RE) is a radio resource unit in the time-frequency domain including one subcarrier and one symbol. A resource block (RB) is a radio resource unit in the time-frequency domain including 12 subcarriers and a plurality of symbols.

The radio frames are assigned system frame numbers (SFNs) counted up from 0 to 1023 in increments of 1. The SFN "0" corresponds to an initial SFN value, and the SFN "1023" corresponds to the largest SFN value. Hence, SFN 0 is assigned to a radio frame that follows a radio frame assigned SFN 1023. The time length of the radio frame is 10 ms, and accordingly the time length of one cycle of the system frame number is 10240 ms (= 10.24 seconds).

Here, the base station apparatus 20 may configure one or a plurality of serving cells for the terminal apparatus 10. The serving cell may correspond to a downlink component carrier and/or an uplink component carrier. A technology in which one or a plurality of serving cells are configured and the base station apparatus 20 and the terminal apparatus 10 perform radio communication may also be referred to as carrier aggregation.

The base station apparatus 20 may configure one or a plurality of bandwidth parts (BWPs) for the terminal apparatus 10 for each of one or a plurality of serving cells. For example, in the downlink of one serving cell, a downlink bandwidth part (DL-BWP) may be configured. In the uplink of one serving cell, an uplink bandwidth part (UL-BWP) may be configured. Here, the DL-BWP may include an initial DL-BWP and/or a dedicated DL-BWP. The UL-BWP may include an initial UL-BWP and/or a dedicated UL-BWP. In the following, the BWP may include the DL-BWP and/or the UL-BWP.

### 1.3. Channels and Control Information

The terminal apparatus 10 and the base station apparatus 20 transmit and receive user data and control information to and from each other. Transmission and reception of downlink and uplink control information will be illustrated below.

The terminal apparatus 10 and the base station apparatus 20 transmit and receive user data and control information, using a plurality of hierarchical channels. A physical channel is a channel used for physical communication between the terminal apparatus 10 and the base station apparatus 20. Examples of physical channels include a physical downlink control channel (PDCCH), a physical broadcast channel (PBCH), and a physical uplink control channel (PUCCH).

A transport channel is a channel located higher than the physical channel, and is mapped to the physical channel in a PHY layer. A plurality of transport channels may be mapped to one physical channel. Examples of the transport channel include a downlink common channel (DownLink Shared Channel, DL-SCH) and an uplink common channel (UpLink Shared Channel, UL-SCH). For example, data in downlink is also referred to as data of the DL-SCH. For example, data in uplink is also referred to as data of the UL-SCH. Here, the data of the DL-SCH includes user data in downlink. The data of the UL-SCH includes user data in uplink.

A logical channel is a channel located higher than the transport channel, and is mapped to the transport channel in the MAC layer. A plurality of logical channels may be mapped to one transport channel, and one logical channel may be mapped to a plurality of transport channels. The logical channels are classified by characteristics of information to be transmitted. Examples of logical channels include a broadcast control channel (BCCH), a common control channel (CCCH), and a dedicated control channel (DCCH).

The base station apparatus 20 transmits downlink control information (DCI) to the terminal apparatus 10, using the PDCCH being a physical channel. The DCI includes information related to downlink and uplink resource allocations to the terminal apparatus 10 and other control information of the terminal apparatus 10. The DCI is mapped to the PDCCH, and corresponds to layer 1 signaling.

Here, regarding transmission of the DCI on the PDCCH, one or a plurality of formats may be defined. A format defined regarding transmission of the DCI on the PDCCH may be referred to as a DCI format. For example, the DCI format may include a DCI format (for example, a format referred to as DCI format 1_0, DCI format 1_1, and/or DCI format 1_2) used for scheduling of a physical downlink shared channel (PDSCH). For example, the DCI format may include a DCI format (for example, a format referred to as DCI format 0_0, DCI format 0_1, and/or DCI format 0_2) used for scheduling of a physical uplink shared channel (PUSCH). The DCI format may include a DCI format not used for scheduling of the PDSCH and/or the PUSCH. The DCI format used for scheduling of the PDSCH and/or the PUSCH may be referred to as a scheduling DCI format. The DCI format not used for scheduling of the PDSCH and/or the PUSCH may be referred to as a non-scheduling DCI format. Hereinafter, for the sake of simplicity of description, the "DCI format" may be simply referred to as the "PDCCH". The "DCI generated according to the DCI format" may be simply referred to as the "DCI format".

For example, the base station apparatus 20 may configure frequency domain resources and/or time domain resources for the terminal apparatus 10 to monitor a PDCCH candidate set. For example, the frequency domain resources in which the terminal apparatus 10 monitors the PDCCH candidate set may be referred to as a control resource set (CORESET). The time domain resources in which the terminal apparatus 10 monitors the PDCCH candidate set may be referred to as a search space set (SSS). The terminal apparatus 10 may monitor the PDCCH candidate set in one or a plurality of CORESETs in the DL-BWP of the serving cell configured with PDCCH monitoring according to a corresponding search space set. Here, to monitor may connote to attempt to decode each of the PDCCH candidates according to the monitored DCI format. The configuration described above may be referred to as blind decoding.

Here, a cyclic redundancy check (CRC) scrambled using a radio network temporary identifier (RNTI) may be added to the DCI (or the DCI format) to be transmitted on the PDCCH. The CRC may also be referred to as a CRC parity bit. A plurality of types of RNTIs are defined. For example, the base station apparatus 20 may transmit an RRC message including at least one of information indicating a Cell-RNTI (C-RNTI), information indicating a Modulation and Coding Scheme Cell-RNTI (MCS-C-RNTI), and information indicating a Configured Scheduling-RNTI (CS-RNTI) to thereby configure each RNTI. In other words, a CRC scrambled using at least one of the C-RNTI, the MCS-C-RNTI, and the CS-RNTI may be added to the DCI (or the DCI format) to be transmitted on the PDCCH.

The terminal apparatus 10 may monitor (and/or receive) the PDCCH and detect (and/or receive) the DCI format.

The terminal apparatus 10 transmits, to the base station apparatus 20, uplink control information (UCI) by using a PUCCH being a physical channel. The UCI includes control information such as a scheduling request (SR), an Ack/Nack in hybrid automatic repeat request (HARQ), and channel state information (CSI). The UCI is mapped to the PUCCH or the PUSCH, and corresponds to Layer 1 signaling.

The base station apparatus 20 transmits, to the terminal apparatus 10, a control element (CE) of a MAC layer by using a DL-SCH being a transport channel. The downlink MAC CE is mapped to a PDSCH via the DL-SCH, and corresponds to Layer 2 signaling.

The terminal apparatus 10 transmits, to the base station apparatus 20, a control element (CE) of a MAC layer by using a UL-SCH being a transport channel. The uplink MAC CE includes control information such as buffer status reporting (BSR). The uplink MAC CE is mapped to a PUSCH via the UL-SCH, and corresponds to Layer 2 signaling.

The base station apparatus 20 transmits (or broadcasts) system information (SI) to the terminal apparatus 10, using the BCCH being a logical channel. The SI includes minimum system information (MSI) and other system information (OSI). The MSI includes a master information block (MIB) and a system information block 1 (SIB1). The SIB1 may be referred to as remaining minimum system information (RMSI). The OSI includes system information blocks (from SIB2), other than the SIB1. Of the BCCH, the MIB is mapped to the PBCH via the broadcast channel (BCH), and the SIB is mapped to the PDSCH via the DL-SCH.

The base station apparatus 20 transmits control information in the RRC layer to the terminal apparatus 10, using a signaling radio bearer (SRB) established between the terminal apparatus 10 and the base station apparatus 20 in the RRC layer. A message exchanged between the base station apparatus 20 and the terminal apparatus 10 in the RRC layer may be hereinafter referred to as an RRC message. A plurality of types of SRBs (for example, SRB0, SRB1, SRB2, SRB3, and SRB4) are present. The SRB is used to transmit and receive a NAS message including control information in the NAS layer, other than the RRC message. To transmit the RRC message from the base station apparatus 20 to the terminal apparatus 10, the CCCH or the DCCH is used. The CCCH and the DCCH are each mapped to the PDSCH via the DL-SCH. The RRC message corresponds to layer 3 signaling.

As an example of a downlink RRC message, an RRC reconfiguration (RRCReconfiguration) message will be described. The RRC reconfiguration message is an RRC message transmitted from the base station apparatus 20 to the terminal apparatus 10 using SRB1 or SRB3. The DCCH is used to transmit the RRC reconfiguration message. The RRC reconfiguration message is used to perform reconfiguration or modification of connection between the base station apparatus 20 and the terminal apparatus 10.

The terminal apparatus 10 transmits the RRC message to the base station apparatus 20, using the SRB described above. To transmit the RRC message from the terminal apparatus 10 to the base station apparatus 20, the CCCH or the DCCH is used. The CCCH and the DCCH are each mapped to the PUSCH via the UL-SCH. The RRC message corresponds to layer 3 signaling.

As an example of an uplink RRC message, a user equipment capability information (UECapabilityInformation) message will be described. The user equipment capability information message is an RRC message transmitted from the terminal apparatus 10 to the base station apparatus 20 using SRB1. The DCCH is used to transmit the user equipment capability information message. The user equipment capability information message is used to notify the base station apparatus 20 of information related to a radio access capability of the terminal apparatus 10.

As an example of an uplink RRC message, a user equipment assistance information (UEAssistanceInformation, UAI) message will be described. The UAI message is an RRC message transmitted from the terminal apparatus 10 to the base station apparatus 20 using SRB1 or SRB3. The DCCH is used to transmit the UAI message. The UAI message is used to notify the base station apparatus 20 of various pieces of information (e.g., UE assistance information) related to the terminal apparatus 10.

### 1.4. Uplink Scheduling

### 1.4.1. Scheduling Request (SR)

An SR is used for the terminal apparatus 10 to request PUSCH radio resource allocation from the base station apparatus 20. An SR may be used for request of a UL-SCH resource for initial transmission. The base station apparatus 20 allocates, to the terminal apparatus 10, a PUCCH resource for transmission of the SR. The base station apparatus 20 transmits, to the terminal apparatus 10, an RRC message including a parameter for the SR. The parameter for the SR is included in an information element (IE) "SchedulingRequestResourceConfig" being an example of an IE for RRC.

The terminal apparatus 10 transmits, to the base station apparatus 20, UCI including the SR by using the configured PUCCH resource. The terminal apparatus 10 may transmit the UCI on demand. The terminal apparatus 10 may transmit the UCI with a configured periodicity. For example, the terminal apparatus 10 may transmit the SR set to "0" (negative SR) and/or the SR set to "1" (positive SR). In accordance with the SR, the base station apparatus 20 allocates a PUSCH radio resource to the terminal apparatus 10.

### 1.4.2. Dynamic Grant (DG)

A DG is a scheduling method of allocating a PUSCH radio resource in accordance with an uplink grant procedure. The base station apparatus 20 transmits, to the terminal apparatus 10, an uplink grant on a PDCCH. The terminal apparatus 10 performs transmission of a PUSCH in accordance with the uplink grant. For example, the base station apparatus 20 may allocate a PUSCH radio resource by using a C-RNTI and/or a DCI format with a CRC scrambled with an MCS-C-RNTI (i.e., DCI format used for scheduling of the PUSCH), and the terminal apparatus 10 may perform uplink transmission by using the PUSCH radio resource allocated. Here, a new data indicator to be included in the C-RNTI and/or the DCI format with the CRC scrambled with the MCS-C-RNTI may be set to 0 or 1. The base station apparatus 20 may allocate a PUSCH radio resource by using a DCI format with a CRC scrambled with a CS-RNTI (i.e., DCI format used for scheduling of the PUSCH), and the terminal apparatus 10 may perform uplink transmission by using the PUSCH radio resource allocated. A new data indicator to be included in the DCI format with the CRC scrambled with the CS-RNTI may be set to 1.

### 1.4.3. Configured Grant (CG)

A CG is a scheduling method of allocating a PUSCH radio resource without the dynamic uplink grant procedure. The CG includes two types, type 1 and type 2. The base station apparatus 20 transmits, to the terminal apparatus 10, an RRC message including a parameter for the CG. The parameter for the CG is included in an information element (IE) "ConfiguredGrantConfig" being an example of an IE for RRC. The IE "ConfiguredGrantConfig" includes a parameter "periodicity" related to a periodicity of transmission using a PUSCH. Note that the parameter "periodicity" is configured in units of the number of slots or number of symbols. Alternatively, the parameter "periodicity" may be configured in units of Frame Per Second (FPS). For type 1, the terminal apparatus 10 initiates transmission of a signal with a configured periodicity, without any trigger by DCI. In contrast, for type 2, the base station apparatus 20 transmits, to the terminal apparatus 10, DCI scrambled with a CS-RNTI. The CS-RNTI is used for activation of periodic transmission. In accordance with such activation by the DCI scrambled with the CS-RNTI, the terminal apparatus 10 initiates transmission using a PUSCH with a configured periodicity.

### 1.5. Logical Channel Prioritization (LCP) Procedure

The terminal apparatus 10 generates a medium access control protocol data unit (MAC PDU) for uplink transmission according to an uplink grant from the base station apparatus 20. In the case of performing a new transmission, the terminal apparatus 10 multiplexes data from a plurality of different logical channels (LCHs) to generate a MAC PDU. At this time, the terminal apparatus 10 generates the MAC PDU in accordance with an LCP procedure. The LCP procedure is priority processing for multiplexing data from a plurality of different LCHs.

For example, the base station apparatus 20 may transmit, to the terminal apparatus 10, an RRC message including a parameter related to the LCP procedure. For example, the RRC message includes a LogicalChannelConfig IE. The terminal apparatus 10 may generate a MAC PDU, based on the LogicalChannelConfig IE included in the RRC message. The LogicalChannelConfig IE may include the following parameters.
priority: A value in the range from 1 to 16, which indicates a priority. The smaller the value of the parameter priority is, the higher the priority becomes. Hereinafter, the priority is referred to as an "LCH priority" in order to distinguish the priority from other priorities (for example, a PHY priority to be described later). In the following description, the expression "the value of the parameter priority is relatively small" may be interpreted as the expression "the LCH priority is relatively high". The expression "the value of the parameter priority is relatively large" may be interpreted as the expression "the LCH priority is relatively low".
prioritizedBitRate (PBR): This indicates a prioritized bit rate.
bucketSizeDuration (BSD): This indicates a bucket size duration. A bucket size is determined by PBR * BSD.

In the LCP procedure, the base station apparatus 20 can configure a mapping restriction for the terminal apparatus 10.

The terminal apparatus 10 may execute the mapping restriction, based on the LogicalChannelConfig IE included in the RRC message. The LogicalChannelConfig IE may include at least one of the following parameters described in Clause 5.4.3.1.1 of NPL 1.
allowedSCS-List: This indicates allowed subcarrier spacing for transmission.
maxPUSCH-Duration: This indicates the maximum PUSCH duration allowed for transmission.
configuredGrantType1Allowed: This indicates whether CG Type 1 may be used for transmission.
allowedServingCells: This indicates a cell allowed for transmission.
allowedCG-List: This indicates CGs allowed for transmission.
allowedPHY-PriorityIndex: This indicates the index of the allowed PHY priority of DG for transmission.
allowedHARQ-mode: This indicates an allowed uplink HARQ mode for transmission.

For example, in a case where allowedCG-List is configured for an LCH, the terminal apparatus 10 can perform mapping of the data of the LCH only to the MAC PDU corresponding to a CG included in allowedCG-List.

For example, when a new transmission is performed, the MAC entity of the terminal apparatus 10 may select LCHs that satisfy a condition indicated by the mapping restriction in accordance with Clause 5.4.3.1.2 of NPL 1.

Thereafter, the MAC entity allocates resources to the selected LCHs in descending order of the LCH priorities (i.e., in ascending order of the values of the parameter priority). For example, the MAC entity assigns the data volume prioritized by the PBR of each LCH to the resources in the MAC PDU in the order of the LCH priorities. In a case where there are available resources in the MAC PDU even after the data prioritized by the PBRs is assigned for all the LCHs, the MAC entity assigns the data of the LCHs to the available resources in the MAC PDU in the order of the LCH priorities. The terminal apparatus 10 performs the above procedure until there is no more data of all the LCHs or until there is no more available resources in the MAC PDU.

To be more specific, the MAC entity of the terminal apparatus 10 may allocate resources to the selected LCHs in accordance with Clause 5.4.3.1.3 of NPL 1. The MAC entity of the terminal apparatus 10 may perform processing (a1) to processing (a3) below.

(a1) For example, the MAC entity allocates resources to a plurality of LCHs selected for an uplink grant with Bj > 0 in descending order of the LCH priorities. In a case where the PBR of an LCH is configured at infinity, the MAC entity allocates resources for all the data that is available for transmission on the LCH, before meeting the PBR of an LCH with a lower LCH priority.

Note that Bj denotes a variable used in the terminal apparatus 10 in the LCP procedure. Here, the subscript j is used for association with a corresponding LCH. Bj is maintained for each LCHj. The MAC entity initializes Bj of this LCHj to zero when the LCH is established. For LCHj, the MAC entity increments Bj by PBR * T before each instance of the LCP procedure. Here, T denotes the time that has elapsed since the last increment of Bj. In a case where Bj is larger than a bucket size (i.e., PBR * BSD), the MAC entity configures Bj to the bucket size.

(a2) The MAC entity decrements Bj by the total size of the MAC SDUs served to the LCHj.

(a3) In a case where any resources remain, all the selected LCHs are served in descending order of the LCH priorities. Specifically, the MAC entity allocates the remaining data in all the selected LCHs to the resources in descending order of the LCH priorities. In this case, regardless of the value of Bj, the MAC entity assigns the remaining data to the resources until either the data for the LCH or resources of the uplink grant is exhausted, whichever comes first.

### 1.6. Extended Reality (eXtended Reality, XR)

Characteristics of traffic generated in XR will be described. In XR, a plurality of types of data (video data, voice data, user data, control data, and the like) are transmitted and received in parallel. A plurality of data streams corresponding to the data segments have different traffic characteristics and QoS requirements.

At timings of transmission and reception of the data, time shifts expressed as jitter, variability, and fluctuation may occur due to factors such as encoding of a video and audio and network latency.

Reference Literature 1 describes that the following definitions can be introduced for transmission and reception in XR.

### [Reference Literature 1] 3GPP TR 23.700-60 V1.1.0 (2022-09)

PDU set: a set of PDUs including one or more PDUs carrying a payload of one unit of information generated at an application level. The application level corresponds, for example, to a frame or a video slice in an XR service.

Data burst: a set of datamultiple PDUs generated and sent by an application in a short period of time. The PDUs within a PDU set may correspond to PDCP service data units (SDUs).

Furthermore, for XR, requirements of a packet delay budget (PDB) as the QoS requirements have been studied. The PDB is an upper bound of packet delay time allowed between the terminal apparatus 10 and the UPF. Note that Reference Literature 1 also describes that the following new QoS parameters can be introduced.

PDU-set delay budget (PSDB): an upper bound of PDU-set delay time allowed between the terminal apparatus 10 and the UPF.

PDU-set error rate (PSER): an upper bound of an error rate calculated between a PDU set processed by a sender, and all the PDUs in a PDU set that has not successfully delivered to an upper layer of a corresponding receiver.

### 1.7. Buffer Status Report (Buffer Status Reporting (BSR))

The terminal apparatus 10 transmits, using an allocated PUSCH radio resource, a BSR by using MAC signaling. The BSR is configured with a MAC CE included in a medium access control protocol data unit (MAC PDU). The BSR is used for indicating information related to a buffer status of uplink data in a MAC entity. Based on the BSR, the base station apparatus 20 performs radio resource allocation for uplink with respect to the terminal apparatus 10.

In the BSR, a LCH is allocated to a logical channel group (LCG). Each LCG includes one or more LCHs. The terminal apparatus 10 calculates, for each LCG, a buffer size of uplink data. The terminal apparatus 10 transmits, to the base station apparatus 20, the buffer size corresponding to each LCG as the BSR.

The base station apparatus 20 transmits, to the terminal apparatus 10, an RRC message including a parameter for the BSR. The parameter for the BSR is included in an information element (IE) "BSR-Config" being an example of an IE for RRC. For example, the IE "BSR-Config" includes three timers, "periodicBSR-Timer", "retxBSR-Timer", and "logicalChannelSR-DelayTimer".

A parameter associated with an LCG is included in an information element (IE) "LogicalChannelConfig" being an example of an IE for RRC. In other words, the base station apparatus 20 may transmit an RRC message including the IE "LogicalChannelConfig" to the terminal apparatus 10. Based on the IE "LogicalChannelConfig" included in the RRC message, the terminal apparatus 10 may identify a configuration related to an LCH and/or LCG. For example, the IE "LogicalChannelConfig" includes an IE "logicalChannelGroup". With the IE "logicalChannelGroup", an LCH is allocated to an LCG. For example, for each of one or a plurality of LCHs, an LCG index (ID) may be configured, and an LCG that such one or a plurality of LCHs belong to may be configured. Note that the IE "LogicalChannelConfig" may include an IE "logicalChannelGroupIAB-Ext". The IE "logicalChannelGroupIAB-Ext" is applied only to an Integrated Access Backhaul-Mobile Termination (IAB-MT). In a case where the IE "logicalChannelGroupIAB-Ext" is configured, the IE "LogicalChannelConfig" is ignored.

The terminal apparatus 10 may trigger the BSR in accordance with a certain condition. For example, for an activated cell group, the terminal apparatus 10 may trigger the BSR when any of the following conditions (b1) to (b4) is satisfied. Note that the following conditions may be referred to as "events".
(b1) For an LCH belonging to a certain LCG, uplink data becomes available to a MAC entity, and either one of the following two is satisfied:
   - the uplink data belongs to an LCH with higher priority than the priorities of any LCHs including available uplink data that belong to any LCG; or
   - none of the LCHs that belong to an LCG includes any available uplink data.
(b2) Uplink resources are allocated and the number of padding bits is equal to or larger than a size of a BSR MAC CE plus its subheader.
(b3) "retxBSR-Timer" expires and at least one of the LCHs belonging to an LCG includes uplink data.
(b4) "periodicBSR-Timer" expires.

The BSR includes Regular BSR, Padding BSR, and Periodic BSR, at least. Regular BSR, Padding BSR, and Periodic BSR may each be triggered based on a different condition. For example, the terminal apparatus 10 triggers Regular BSR in a case where either of the condition (b1) or (b3) is satisfied. The terminal apparatus 10 triggers Padding BSR in a case where the condition (b2) is satisfied. The terminal apparatus 10 triggers Periodic BSR in a case where the condition (b4) is satisfied.

The BSR includes a plurality of formats. The plurality of formats include Short BSR and Long BSR, at least. A MAC PDU including the BSR includes a MAC subheader. The MAC subheader includes a logical channel identifier (LCID) or an extended logical channel identifier (eLCID). The value of LCID or eLCID may be referred to as a codepoint. A format of the BSR are each identified by a codepoint value.

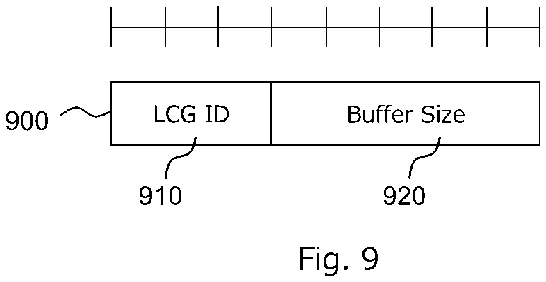

Short BSR is a format for reporting of a buffer status (i.e., buffer size) of one LCG. As illustrated in FIG. 9, the Short BSR includes one field 900 having a fixed size of 8 bits. The field 900 includes a first part 910 and a second part 920.

The first part 910 includes 3 bits. The first part 910 is information for identifying the LCG for which the buffer status is reported. The first part 910 may be referred to as an "LCG ID field".

The second part 920 includes 5 bits. The second part 920 is information for identifying a total amount of data available for all the LCHs included in the LCG indicated by the first part 910. The second part 920 may be simply referred to as a "buffer size". The second part 920 indicates an index indicating the number of bytes. The terminal apparatus 10 configures the second part 920 to an index corresponding to the buffer size with reference to a predetermined BSR table. The BSR table includes values (which are also referred to as "codepoints", for example) of 32 indices. For example, the second part 920 indicates any one of the values of 0 to 31. The value of each index corresponds to a range of the buffer size. In other words, the BSR table defines a correspondence between the indices and the range of the buffer size. As the value of the index is smaller, the buffer size corresponding to the value of the index is smaller. As the value of the index is larger, the buffer size corresponding to the value of the index is larger.

Note that the short BSR may include a Truncated format being a format for Padding BSR and an Extended format being a format with which a larger amount of information can be transmitted.

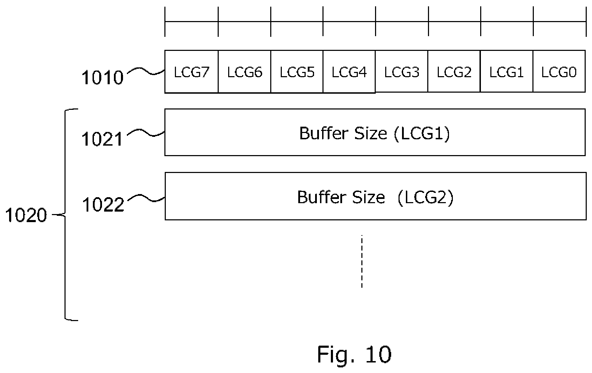

The long BSR is a format for reporting the buffer statuses (i.e., buffer sizes) of a plurality of LCGs. As illustrated in FIG. 10, the long BSR has a variable size. The long BSR includes an LCG field 1010 and a buffer size field 1020.

The LCG field 1010 includes 8 bits. In the LCG field 1010, the 8 bits respectively correspond to 8 "LCGi"s. Here, i is an integer of 0 to 7. The definition of i is the same in the following description. The LCG field 1010 may indicate whether the buffer size field for LCGi is present. For example, in the LCG field 1010, in a case where the value of LCGi is 1, this indicates that the buffer size field corresponding to LCGi is present. In a case where the value of LCGi is 0, this indicates that the buffer size field corresponding to LCGi is not present.

The number of fields included in the buffer size field 1020 is variable according to the value of the LCG field 1010. In the LCG field 1010, it is assumed that the bit corresponding to LCG1 is 1 and the bit corresponding to LCG2 is 1. Thus, the buffer size field 1020 includes a field 1021 corresponding to LCG1 and a field 1022 corresponding to LCG2. Note that, in FIG. 10, a field corresponding to LCG0 is not included in the buffer size field 1020, because it is assumed that the bit corresponding to LCG0 is 0.

Each field included in the buffer size field 1020 includes 8 bits. Each field indicates the buffer size to be reported (for example, the size of data available for transmission). Each field indicates the index indicating the number of bytes.

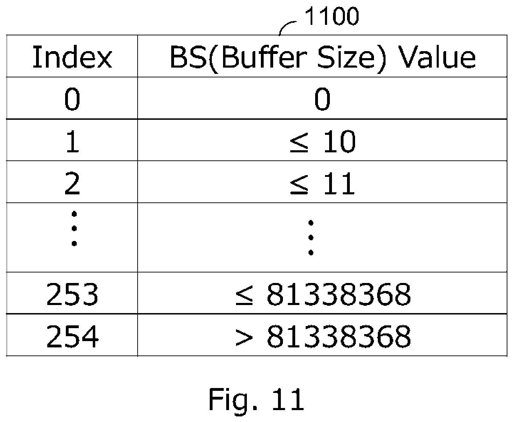

The terminal apparatus 10 configures the buffer size field 1020 to an index corresponding to the buffer size with reference to a BSR table 1100 illustrated in FIG. 11.

The BSR table 1100 includes values (which are also referred to as "codepoints", for example) of 255 indices. The indices are values of 0 to 254. The value of each index corresponds to a range of the buffer size. In other words, the BSR table 1100 defines a correspondence between the indices and the range of the buffer size. As the value of the index is smaller, the buffer size corresponding to the value of the index is smaller. As the value of the index is larger, the buffer size corresponding to the value of the index is larger. The range of each buffer size corresponding to the values of 255 indices is defined according to a certain exponential function. Thus, as the value of the index is larger, the range of the buffer size corresponding to the value of the index is larger.

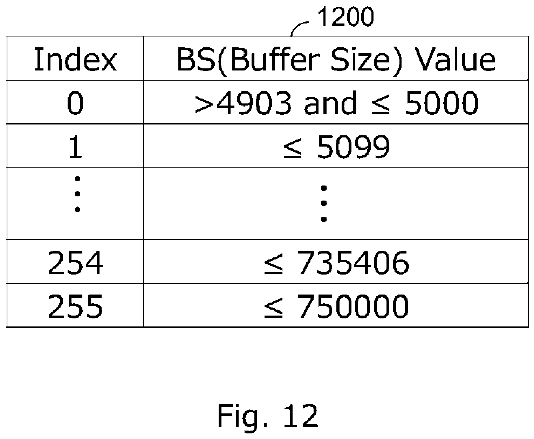

Further, the BSR may include a Refined Long BSR as a format to support XR traffic. An additional BSR table 1200 illustrated in FIG. 12 may be defined for the Refined Long BSR. Hereinafter, a BSR table 1100 in FIG. 11 is referred to as a "first table 1100", and a BSR table 1200 in FIG. 12 is referred to as a "second table 1200".

The second table 1200 is a table for an 8-bit buffer status field, similar to the first table 1100. Accordingly, the second table 1200 may have 256 index values. The indices may be values from 0 to 255. Each index value may correspond to a buffer size range. In other words, the second table 1200 may define a correspondence between each index and a buffer size range. For example, the smaller the index value is, the smaller the buffer size corresponding to the index value may become. The larger the index value is, the larger the buffer size corresponding to the index value may become. The buffer size ranges corresponding to the 256 respective index values may be defined according to a certain exponential function.

Further, the range and/or granularity of the second table 1200 is different from that defined in the first table 1100. Here, the range of the second table 1200 may mean the range between the minimum value and the maximum value of the buffer size in the second table 1200. The granularity of the second table 1200 may mean the degree of fineness or coarseness of the division width in a case where the range of the second table 1200 is divided by the number of indices (for example, 256). Note that, in a case where the buffer size range corresponding to each index value is defined according to the certain exponential function, the larger the index value is, the larger the division width (i.e., the buffer size range) corresponding to the index value may become.

For example, the range of the second table 1200 may be narrower than the range of the first table 1100. In other words, a range narrower than that of the first table 1100 may be divided into 256 ranges, and the index values may be assigned to the respective divided ranges. Accordingly, the granularity of the second table 1200 may have a finer granularity than that of the first table 1100.

The base station apparatus 20 may transmit an RRC message including configuration information for the second table 1200 to the terminal apparatus 10. The configuration information may be included in a MAC-CellGroupConfig IE, which is an example of an RRC information element (IE). For example, the configuration information may be additionalBSR-TableAllowed included in the MAC-CellGroupConfig IE.

additionalBSR-TableAllowed may be "information indicating whether the terminal apparatus 10 is allowed to use the second table 1200 for the LCG". For example, additionalBSR-TableAllowed is a bit string (i.e., a bitmap) that includes a plurality of bits. For example, the leftmost bit is a bit corresponding to the LCG ID "0". The second bit from the left end is a bit corresponding to the LCG ID "1". In a case where the value of a bit is 1, this may indicate that the second table 1200 is allowed to be used in addition to the first table 1100 when the buffer size of the LCG corresponding to the bit is reported. In a case where the value of a bit is 0, this may indicate that the second table 1200 is not allowed to be used when the buffer size of the LCG corresponding to the bit is reported. In other words, in a case where the value of a bit is 0, this may indicate that only the first table 1100 is used when the buffer size of the LCG corresponding to the bit is reported.

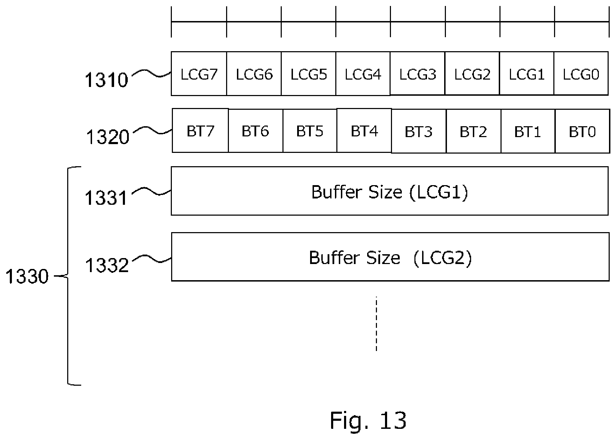

As illustrated in FIG. 13, a Refined Long BSR includes an LCG field 1310, a buffer size table (BT) field 1320, and a buffer size field 1330.

The LCG field 1310 is constituted of 8 bits. The LCG field 1310 has the same configuration as the LCG field 1010 of FIG. 10. The LCG field 1310 may indicate whether a buffer size field for LCGi is present.

The BT field 1320 is constituted of 8 bits. The BT field 1320 is present only in a case where a corresponding value in the LCG field 1310 is configured at 1 and is "reserved" otherwise. Each bit of the BT field 1320 indicates which table has been used for the buffer size field 1330 for LCGi. In other words, the value of BTi indicates which of the first table 1100 and the second table 1200 has been used to indicate the buffer size of LCGi. In a case where the value of BTi is 0, this may indicate that the first table 1100 has been used to indicate the buffer size of LCGi. In a case where the value of BTi is 1, this may indicate that the second table 1200 has been used to indicate the buffer size of LCGi.

The number of fields included in the buffer size field 1330 is variable depending on the values in the LCG field 1310. It is assumed that, in the LCG field 1310, a bit corresponding to LCG1 indicates 1, and a bit corresponding to LCG2 indicates 1. Accordingly, the buffer size field 1330 includes a field 1331 corresponding to LCG1 and a field 1332 corresponding to LCG2. Note that, since it is assumed that the bit corresponding to LCG0 is 0 in FIG. 13, the buffer size field 1330 does not include a field corresponding to LCG0.

Further, it is assumed that, in the BT field 1320, the bit of BT1 corresponding to LCG1 indicates 0 and the bit of BT2 corresponding to LCG2 indicates 1. Accordingly, the field 1331 corresponding to LCG1 is configured by referring to the first table 1100. The field 1332 corresponding to LCG2 is configured by referring to the second table 1200.

Note that the MAC PDU may include identification information for identifying whether the BSR is Refined Long BSR. For example, a MAC subheader includes an LCID or eLCID value (i.e., a codepoint). An LCID or eLCID value indicating that the BSR is Refined Long BSR may be defined.

Note that the long BSR may include a Truncated format and an Extended format, similarly to the short BSR.

The BSR may include a Pre-emptive BSR format and an Extended Pre-emptive BSR format. These formats are used in the IAB-MT.

For the regular BSR and the periodic BSR, the MAC entity for which the logicalChannelGroup-IABExt IE is configured by upper layers may select any one of the long BSR, the Extended long BSR, and the Extended short BSR as follows.
(c1) If more than one LCG has data available for transmission when the MAC PDU containing the BSR is to be built:
   (c2) if the maximum LCG ID among the configured LCGs is 7 or lower:
      the terminal apparatus 10 transmits (or reports) Long BSR for all LCGs which have available data,
   (c2) else:
      the terminal apparatus 10 transmits (or reports) Extended Long BSR for all LCGs which have available data,
(c1) else,
   the terminal apparatus 10 transmits (or reports) Extended Short BSR.

For Regular BSR and Periodic BSR, the MAC entity for which a logicalChannelGroup-IABExt IE is not configured by upper layers may select any of Short BSR, Long BSR, and Refined Long BSR as follows.
(d1) For at least one LCG configured with additionalBSR-TableAllowed, if the volume of available data for transmission is within the buffer size range indicated by the second table 1200:
   the terminal apparatus 10 transmits (or reports) Refined Long BSR for all LCGs which have available data for transmission.
(d1) Else:
   (d2) if more than one LCG has data available for transmission when the MAC PDU containing the BSR is to be built:
      the terminal apparatus 10 transmits (or reports) Long BSR for all LCGs which have available data.
   (d2) Else:
      the terminal apparatus 10 transmits (or reports) Short BSR.

For padding BSR, the terminal apparatus 10 may transmit any of the following BSR formats according to a condition to be satisfied.
- Short BSR
- Long BSR
- Short Truncated BSR
- Long Truncated BSR
- Extended Short BSR
- Extended Long BSR
- Extended Short Truncated BSR
- Extended Long BSR Truncated BSR

A procedure in which the terminal apparatus 10 transmits a BSR MAC CE to the base station apparatus 20 will be described below.

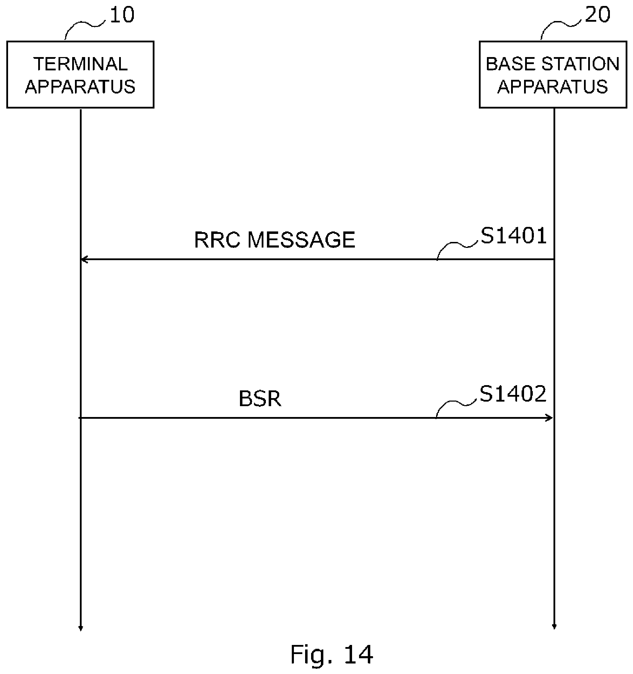

As illustrated in FIG. 14, the communicator 220 of the base station apparatus 20 transmits an RRC message to the terminal apparatus 10 (S1401). The RRC message includes a parameter related to BSR. The RRC message may be an RRC reconfiguration (RRCReconfiguration) message.

The controller 110 of the terminal apparatus 10 triggers BSR, based on the parameter included in the RRC message. For example, the controller 110 triggers BSR, based on at least one of conditions (b1) to (b4) above. The communicator 120 of the terminal apparatus 10 transmits the BSR (S1402). The controller 210 of the base station apparatus 20 performs radio resource allocation for the terminal apparatus 10, based on the BSR.

### 1.8. Delay Status Reporting (DSR)

The terminal apparatus 10 transmits a DSR by MAC signaling by using allocated radio resources for PUSCH. The DSR is configured by a MAC CE contained in the MAC PDU. The DSR is used by the terminal apparatus 10 to provide the base station apparatus 20 with delay status of LCGs. The base station apparatus 20 performs radio resource allocation for uplink to the terminal apparatus 10, based on the DSR.

The terminal apparatus 10 reports delay status (or delay information) for each LCG in the DSR. The delay status may include a remaining time until certain expiration. For example, the remaining time may be the remaining time of a PDCP discard timer.

The base station apparatus 20 transmits an RRC message including a parameter related to DSR to the terminal apparatus 10. For example, information related to the above PDCP discard timer may be included in a PDCP-Config information element (IE), which is an example of an RRC IE. The PDCP discard timer may be configured for a data radio bearer (DRB). The PDCP entity of the terminal apparatus 10 starts, based on reception of a PDCP service data unit (SDU) from an upper layer, a PDCP discard timer associated with the PDCP SDU.

Further, the parameter related to DSR may be included in a MAC-CellGroupConfig IE, which is an example of an RRC information element (IE). For example, the MAC-CellGroupConfig IE includes information for triggering a DSR. Specifically, the MAC-CellGroupConfig IE may include remainingTimeThreshold. remainingTimeThreshold is a threshold used for the above remaining time to trigger a DSR for an LCG. remainingTimeThreshold may be configured for each LCG. To be more specific, remainingTimeThreshold may be configured in association with an LCG ID.

In a case where an LCG is configured for DSR, the MAC entity of the terminal apparatus 10 may trigger a DSR as follows. The MAC entity may trigger a DSR for the LCG when both of (e1) and (e2) below are satisfied.
(e1) The shortest remaining time of a plurality of PDCP discard timers among all data buffered in the LCG that has not transmitted in any MAC PDU or has not reported as data volume in a DSR MAC CE becomes below remainingTimeThreshold configured for the LCG.
(e2) There is no DSR pending (pending DSR) for the LCG from the last transmission in the DSR MAC CE.

In a case where a DSR is triggered, the DSR may be considered as pending until the DSR is cancelled. The MAC entity may cancel the pending DSR in a case where all the SDUs associated with the pending DSR are discarded or in a case where a MAC PDU including any DSR MAC CE including all the SDUs associated with the DSR or delay information of all the SDUs associated with the DSR is transmitted.

If there is at least one DSR pending, the MAC entity may indicate to generate a DSR MAC CE if UL-SCH resources are available for a new transmission and the UL-SCH resources can accommodate the DSR MAC CE plus its subheader. If there is no pending SR (i.e., scheduling request) already triggered by the DSR procedure for the same LCH, the MAC entity may trigger an SR.

Further, the terminal apparatus 10 may report the size of certain data for each LCG in a DSR. For example, the certain data may be the size of data with a short remaining time and is referred to as "delay-critical UL data".

As the delay-critical UL data in an LCG, a corresponding PDCP entity and RLC entity may calculate the volume of the delay-critical UL data as follows.

The PDCP entity may calculate delay-critical PDCP data volume in consideration of (f1) to (f5) below.
(f1) Delay-critical PDCP SDUs for which no PDCP data PDU have been constructed
(f2) PDCP data PDUs that contains a delay-critical PDCP SDU and has not been submitted to a lower layer
(f3) PDCP Control PDUs
(f4) for AM DRBs, PDCP SDUs to be retransmitted
(f5) for AM DRBs, PDCP data PDUs to be retransmitted

In a case where pdu-SetDiscard is not configured, the delay-critical PDCP SDU is a PDCP SDU with a remaining time until the PDCP discard timer expires is below remainingTimeThreshold. pdu-SetDiscard is a parameter indicating whether or not the terminal apparatus 10 performs PDU-set-based discard processing in the PDCP entity. pdu-SetDiscard may be included in the PDCP-Config IE. In a case where pdu-SetDiscard is configured, the delay-critical PDCP SDU is a PDCP SDU belonging to a PDU set, with a remaining time until the PDCP discard timer expires is below remainingTimeThreshold for at least one PDCP SDU. Note that the AM DRB is a data radio bearer that uses an RLC acknowledge mode (AM).

The RLC entity may calculate delay-critical RLC data volume in consideration of (g1) to (g3) below.
(g1) Delay-critical RLC SDUs or delay-critical RLC SDU segments that have not yet been included in an RLC data PDU
(g2) RLC data PDUs pending for initial transmission, and containing a delay-critical RLC SDU or a delay-critical RLC SDU segment
(g3) RLC data PDUs that are pending for retransmission in RLC AM

The delay-critical RLC SDU is an RLC SDU corresponding to a PDCP PDU indicated as delay-critical by the PDCP.

From the above, the PDCP entity may indicate a PDU including a PDCP SDU below remainingTimeThreshold to the RLC entity, and the PDU may be regarded as a delay-critical RLC SDU. In addition, the PDU including the delay-critical RLC SDU may be included in the volume of the delay-critical UL data.

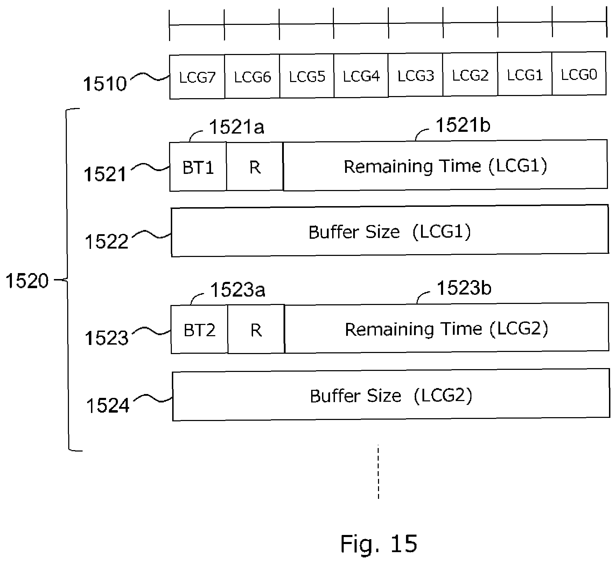

For example, the terminal apparatus 10 may transmit a DSR MAC CE illustrated in FIG. 15. As illustrated in FIG. 15, the DSR MAC CE includes an LCG field 1510 and a delay information field 1520.

The LCG field 1510 is constituted of 8 bits. In the LCG field 1510, 8 bits correspond to eight respective groups LCGi. The LCG field 1510 may indicate whether delay information for LCGi (i.e., a remaining time field and a buffer size field to be described later) is present in the delay information field 1520. For example, in the LCG field 1510, in a case where the value of LCGi is 1, this may indicate that the remaining time field and the buffer size field for LCGi are present in the delay information field 1520. In a case where the value of LCGi is 0, this may indicate that the remaining time field and the buffer size field for LCGi are not present in the delay information field 1520.

The number of fields included in the delay information field 1520 is variable depending on the values in the LCG field 1510. It is assumed that, in the LCG field 1510, a bit corresponding to LCG1 indicates 1, and a bit corresponding to LCG2 indicates 1. Accordingly, the delay information field 1520 includes delay information corresponding to LCG1 (i.e., a remaining time field 1521 and a buffer size field 1522). Further, the delay information field 1520 includes delay information corresponding to LCG2 (i.e., a remaining time field 1523 and a buffer size field 1524). Note that it is assumed that the bit corresponding to LCG0 in the LCG field 1510 is 0. Accordingly, delay information corresponding to LCG0 is not included in the delay information field 1520.

The remaining time field 1521 includes at least a first portion 1521a and a second portion 1521b. Note that "R" in the remaining time field 1521 is a reserved bit.

The first portion 1521a is constituted of 1 bit and indicates a buffer size table (BT). The first portion 1521a may indicate which of the first table 1100 and the second table 1200 has been used to indicate the buffer size of LCG1. In other words, the first portion 1521a may indicate whether the buffer size field 1522 is configured by the first table 1100 or the second table 1200. In a case where the value of the first portion 1521a is 0, this may indicate that the first table 1100 has been used to configure the buffer size field 1522. In a case where the value of the first portion 1521a is 1, this may indicate that the second table 1200 has been used to configure the buffer size field 1522.

The second portion 1521b is constituted of 6 bits. The second portion 1521b indicates the remaining time for the data corresponding to LCG1. To be more specific, the second portion 1521b may indicate the shortest remaining time of the PDCP discard timer at the time of the first symbol of the first transmission of the PUSCH including the DSR MAC CE among all the PDCP SDUs buffered in LCG1.

The buffer size field 1522 is constituted of 8 bits. The buffer size field 1522 indicates the total volume of delay-critical UL data for LCG1. In a case where additionalBSR-TableAllowed is configured and the buffer size (i.e., the total volume of delay-critical UL data) is within the range of the buffer size indicated by the second table 1200, the MAC entity configures the buffer size field 1522 by using the second table 1200. Otherwise, the MAC entity configures the buffer size field 1522 by using the first table 1100.

The remaining time field 1523 has the same configuration as that of the remaining time field 1521. The remaining time field 1523 includes at least a first portion 1523a and a second portion 1523b. For example, the first portion 1523a indicates whether the buffer size field 1524 is configured by the first table 1100 or the second table 1200. For example, the second portion 1523b indicates the remaining time for the data corresponding to LCG2.

The buffer size field 1524 has the same configuration as that of the buffer size field 1522. For example, the buffer size field 1524 indicates the total volume of delay-critical UL data for LCG2.

Note that the MAC PDU may include identification information for identifying whether this is a DSR MAC CE. For example, a MAC subheader may include an LCID or eLCID value indicating that this is a DSR MAC CE.

A procedure in which the terminal apparatus 10 transmits a DSR MAC CE to the base station apparatus 20 will be described below.

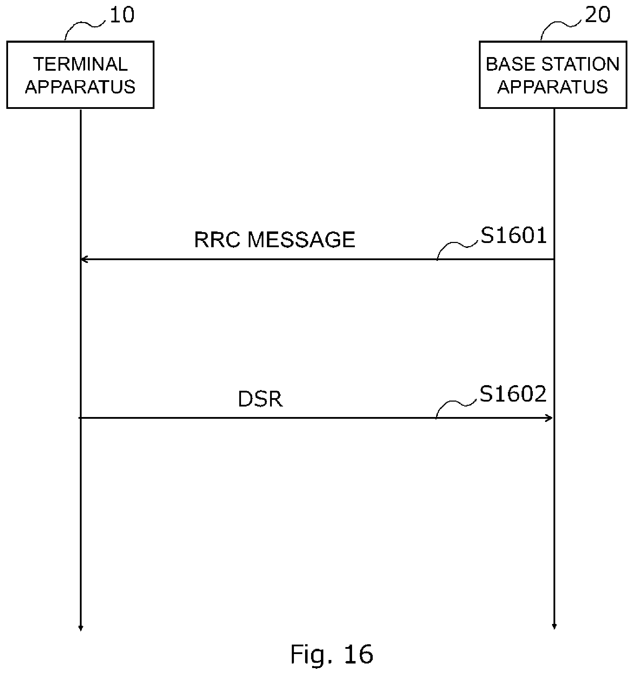

As illustrated in FIG. 16, the communicator 220 of the base station apparatus 20 transmits an RRC message to the terminal apparatus 10 (S1601). The RRC message includes a parameter related to DSR. The RRC message may be an RRC reconfiguration (RRCReconfiguration) message.

The controller 110 of the terminal apparatus 10 triggers a DSR, based on the parameter included in the RRC message. For example, in a case where the LCG is configured for a DSR, the controller 110 triggers a DSR for the LCG when both (e1) and (e2) above are satisfied. The communicator 120 of the terminal apparatus 10 transmits the DSR (S1602).

The controller 210 of the base station apparatus 20 performs radio resource allocation to the terminal apparatus 10, based on the DSR. The controller 210 may determine the degree of delay, based on the delay information included in the DSR. For example, the controller 210 may determine the degree of delay, based on the remaining time and the volume of the delay-critical UL data. The controller 210 may allocate radio resources for uplink communication from the terminal apparatus 10, based on the degree of delay.

### 1.9. PDU Set Importance (PSI)

In communication requiring being real-time, such as XR, use of a real-time transport protocol (RTP) is assumed. An RTP packet includes an RTP payload, an RTP header, and the like.

In NPL 3, a field included in RTP header extension is defined. The importance of a PDU set described above (i.e., PSI) is included in the RTP header extension. The PSI is associated with the PDU set and indicates the importance of the PDU set compared to other PDU sets in the same QoS flow.

The PSI is represented by, for example, 4 bits. The PSI may be a value of 0 to 15. The smaller the value of the PSI is, the higher the importance of the PDU set associated with the PSI becomes. For example, the importance of the PDU set associated with the PSI "0" is the highest. The importance of the PDU set associated with the PSI "15" is the lowest. Hence, in the following description, the expression "the value of the PSI is relatively small" may be interpreted as the expression "the importance of the corresponding data (i.e., PDU set) is relatively high". The expression "the value of the PSI is relatively large" may be interpreted as the expression "the importance of the corresponding data (i.e., PDU set) is relatively low".

### 1.10. Data Discarding Processing Based on PSI

The terminal apparatus 10 may perform data (for example, SDU) discard processing based on PSI. Hereinafter, such discard processing is also referred to as "PSI-based discard processing" or "PSI-based SDU discard" for simplicity of notation.

The base station apparatus 20 transmits an RRC message including a parameter related to PSI-based discard processing to the terminal apparatus 10. For example, the parameter is included in a PDCP-Config information element (IE), which is an example of an RRC IE. The PDCP-Config IE includes a DiscardTimerForLowImportance. DiscardTimerForLowImportance is a discard timer used for PSI-based discard processing and is used for data having relatively low importance (i.e., data having a relatively large PSI value). Hereinafter, the PDCP discard timer that is normally used is referred to as a "first discard timer", and DiscardTimerForLowImportance that can be used instead of the first discard timer in the PSI-based discard processing is referred to as a "second discard timer". The second discard timer is always configured to be shorter than the first discard timer.

The second discard timer is started instead of the first discard timer when PSI-based discard processing is activated.

Specifically, based on reception of a PDCP SDU from an upper layer, in a case where PSI-based discard processing is activated, the second discard timer is configured, and the PDCP SDU belongs to a PDU set with low importance (in other words, a large value of PSI), the PDCP entity of the terminal apparatus 10 starts the second discard timer associated with the PDCP SDU. Otherwise, the PDCP entity of the terminal apparatus 10 starts, based on reception of a PDCP SDU from an upper layer, the first discard timer associated with the PDCP SDU.

The base station apparatus 20 transmits, to the terminal apparatus 10, a MAC CE for indicating a state of activation or deactivation of PSI-based discarding processing.

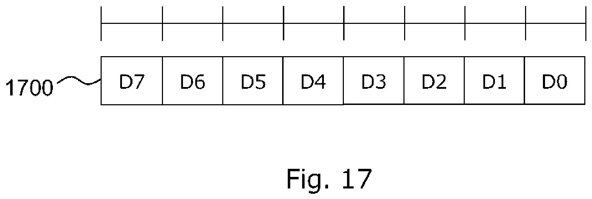

For example, the base station apparatus 20 may transmit a MAC CE illustrated in FIG. 17. The MAC CE may be referred to as a "PSI-based SDU discard activation/deactivation MAC CE". As illustrated in FIG. 17, the MAC CE includes an 8-bit field 1700. In the field 1700, Di may indicate the state of activation or deactivation of PSI-based discard processing among the DRBs for which PSI-based discard processing is configured, in ascending order of the DRB IDs. In a case where the value of Di is 1, this may indicate that PSI-based discard processing is activated for the DRB corresponding to Di. In a case where the value of Di is 0, this may indicate that PSI-based discard processing is deactivated for the DRB corresponding to Di.

Note that, in the description of NPL 1, there is a possibility that it is not possible to specify the DRB to which indication of Di corresponds. Accordingly, in a case where the second discard timer is configured for an DRB, the DRB may be regarded as the "DRB for which PSI-based discard processing is configured" described above. According to this configuration, it is possible to clearly specify the "DRB for which PSI-based discarding processing is configured".

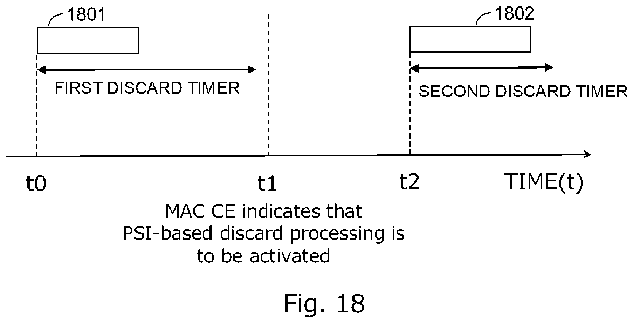

An example of the PSI-based discarding processing will be described below. As illustrated in FIG. 18, the PDCP entity of the terminal apparatus 10 receives a packet 1801 from an upper layer at time t0. The PDCP entity starts the first discard timer from time t0. In a case where the first discard timer expires, the PDCP entity discards the packet 1801.

The terminal apparatus 10 receives the MAC CE illustrated in FIG. 17 from the base station apparatus 20 at time t1. Assume that PSI-based discard processing is activated for a corresponding DRB in the MAC CE. Thereafter, the PDCP entity receives a packet 1802 from the upper layer at time t2. Assume that the second discard timer is configured and that the packet 1802 belongs to a PDU set with low importance. In this case, the PDCP entity starts the second discard timer instead of the first discard timer. In a case where the second discard timer expires, the PDCP entity discards the packet 1802. According to the above configuration, it is possible to discard a packet with low importance at an early stage.

### 1.11. Enhancement of LCP Procedure

In the above-described LCP procedure, the parameter priority is configured for an LCH, but delay information of data buffered in the LCH is not considered. For example, assume that the LCH priority of LCH1 is higher than that of LCH2. In this situation, in a case where the remaining time for data buffered in LCH2 becomes short, data buffered in LCH1 is prioritized even though the data in LCH2 should be prioritized. This may cause the data of LCH2 to be discarded as a result of expiration of the first discard timer (or the second discard timer). Consequently, the capacity may be reduced.

Details of each of aspect 1 and aspect 2 for solving the above-described problem will be described below.

### 1.12. Aspect 1

The terminal apparatus 10 may change priorities in the LCP procedure, based on a certain condition. Hereinafter, the processing may be referred to as "priority change processing based on a certain condition".

The certain condition may include at least one of (h1) to (h5) below. Details of each of conditions (h1) to (h5) will be described later.
(h1) Condition related to trigger of a DSR
(h2) Condition related to delay-critical UL data
(h3) Condition related to a certain timer
(h4) Condition related to indication from an upper layer
(h5) Condition related to a MAC CE (i.e., PSI-based SDU discard activation/deactivation MAC CE) illustrated in FIG. 17

The base station apparatus 20 may transmit a parameter related to the priority change processing based on a certain condition to the terminal apparatus 10. The base station apparatus 20 may transmit a parameter related to the priority change processing based on a certain condition, by using at least one of an RRC message, a MAC CE, and DCI.

The parameter related to the priority change processing based on a certain condition includes a parameter related to at least one of conditions (h1) to (h5) below. A parameter related to the priority change processing based on a certain condition may be configured for an LCH. For example, a LogicalChannelConfig IE may include a parameter related to the priority change processing based on a certain condition. A parameter related to the priority change processing based on a certain condition may be configured for an LCG. For example, an IE related to the LCG may include a parameter related to the priority change processing based on a certain condition. A parameter related to the priority change processing based on a certain condition may be configured for a cell group. For example, the parameter related to the priority change processing based on a certain condition may be configured in association with the cell group by using a MAC-CellGroupConfig IE.

The parameter related to the priority changing processing based on a certain condition may include information explicitly or implicitly indicating whether or not the priority changing processing based on a certain condition is applied. The information may indicate "applying the priority change processing based on a certain condition" or "disapplying the priority change processing based on a certain condition". The information may be a flag indicating "applying the priority change processing based on a certain condition" or "disapplying the priority change processing based on a certain condition".

A plurality of aspects of the priority change processing based on a certain condition will be described below.

### 1.12.1. Aspect 1-1

A parameter related to the priority change processing based on a certain condition may include information related to first priority in the LCP procedure. Hereinafter, the information related to the first priority is referred to as "first priority information". The first priority information may be information related to priority, which is used in the LCP procedure even in a case where a certain condition to be described later is not satisfied.

The base station apparatus 20 may transmit the first priority information to the terminal apparatus 10 by using at least one of an RRC message, a MAC CE, and DCI.

The first priority information may be configured for each LCH. Specifically, the first priority information may be information used to determine the priority for an LCH in the LCP procedure. For example, a LogicalChannelConfig IE in the RRC message may include the first priority information. The first priority information may be a parameter used in an existing LCP procedure. In other words, the first priority information may be at least one of the above-described parameters priority, prioritizedBitRate, and bucketSizeDuration.

The first priority information may be configured for each LCG. Specifically, the first priority information may be information used to determine the priority for an LCH belonging to an LCG in the LCP procedure. The first priority information may be configured in association with the LCG by using the IE associated with the LCG in an RRC message. The first priority information may be configured for each cell group. For example, the first priority information may be configured in association with a cell group by using a MAC-CellGroupConfig IE in the RRC message.

The parameter related to the priority change processing based on a certain condition may include information related to the second priority in the LCP procedure. Hereinafter, the information related to the second priority is referred to as "second priority information". As will be described later, the second priority information is information used instead of the first priority information in a case where a certain condition (for example, at least one of conditions (h1) to (h5)) is satisfied.

The base station apparatus 20 may transmit the second priority information to the terminal apparatus 10 by using at least one of an RRC message, a MAC CE, and DCI. In another example, the second priority information may be a predefined fixed value.

The second priority information may be configured for each LCH. Specifically, the second priority information may be information used to determine the priority for an LCH in the LCP procedure. For example, a LogicalChannelConfig IE in the RRC message may include the second priority information.

The second priority information may include information corresponding to a parameter used in an existing LCP procedure. For example, the second priority information may include at least one of information corresponding to the parameter priority, information corresponding to the parameter prioritizedBitRate, and information corresponding to the parameter bucketSizeDuration. Hereinafter, the information corresponding to the parameter priority as the second priority information may be referred to as "priorityForDelayCritical". The information corresponding to the parameter prioritizedBitRate as the second priority information may be referred to as "prioritizedBitRateForDelayCritical". The information corresponding to the parameter bucketSizeDuration as the second priority information may be referred to as "bucketSizeDurationForDelayCritical".

The second priority information may be configured for each LCG. Specifically, the second priority information may be information used to determine the priority for an LCH belonging to an LCG in the LCP procedure. The second priority information may be configured in association with the LCG by using the IE associated with the LCG in an RRC message. The second priority information may be configured for each cell group. For example, the second priority information may be configured in association with a cell group by using a MAC-CellGroupConfig IE in the RRC message.

The second priority information may be configured as an offset value with the first priority information as a reference. In other words, the second priority information may include information related to an offset value for the first priority information. In another example, the offset value may be a predefined fixed value. The terminal apparatus 10 may calculate the second priority information, based on the first priority information and the offset value.

In a case of performing a new transmission (i.e., a case of applying the LCP procedure), the terminal apparatus 10 may select either of the first priority information and the second priority information, based on a certain condition. "Selecting either of the first priority information and the second priority information" may be interpreted as "activating or deactivating either of the first priority information and the second priority information" or "applying or disapplying either of the first priority information and the second priority information".

In a case of performing a new transmission, the terminal apparatus 10 may select either of the first priority information and the second priority information, based on a certain condition, and perform the LCP procedure by using the selected priority information.

The terminal apparatus 10 may select either of the first priority information and the second priority information for each LCH. For example, in a case where the second priority information is configured for an LCH and a certain condition is satisfied for the LCH, the terminal apparatus 10 may select the second priority information for the LCH. In a case where the second priority information is configured for an LCH and a certain condition is not satisfied for the LCH, the terminal apparatus 10 may select the first priority information for the LCH. In a case where the second priority information is not configured for an LCH, the terminal apparatus 10 may select the first priority information.

Note that the terminal apparatus 10 may select either of the first priority information and the second priority information for each LCG. The terminal apparatus 10 may select either of the first priority information and the second priority information for each cell group. The processing for each LCH to be described below may be interpreted as processing for each LCG or each cell group.

In a case where the second priority information is configured, the terminal apparatus 10 may select either of the first priority information and the second priority information, based on at least one of conditions (h1) to (h5). Details of the processing of each of conditions (h1) to (h5) will be described below.

### 1.12.2. Condition (h1)

In a case where a DSR is triggered for an LCG, the controller 110 of the terminal apparatus 10 may select the second priority information for the LCH belonging to the LCG. In a case where a DSR is not triggered for an LCG, the controller 110 may select the first priority information for an LCH belonging to the LCG. In a case where all the SDUs associated with the triggered DSR are discarded or included in a MAC PDU for transmission, the controller 110 may select the first priority information for the LCH belonging to the LCG.

### 1.12.3. Condition (h2)

In a case where an LCH (or an LCG) has delay-critical UL data, the controller 110 may select the second priority information for the LCH (or an LCH belonging to the LCG). In a case where an LCH (or an LCG) does not have delay-critical UL data, the controller 110 may select the first priority information for the LCH (or an LCH belonging to the LCG).

The expression "an LCH (or an LCG) has delay-critical UL data" may mean that the delay-critical UL data calculated as described above in the RLC layer and/or the PDCP layer associated with the LCH (or the LCG) is not zero. In other words, "an LCH (or an LCG) has delay-critical UL data" may mean that the RLC layer and the PDCP layer associated with the LCH (or the LCG) has any data of (f1) to (f5) and (g1) to (g3) above.

In another example, "an LCH (or an LCG) has delay-critical UL data" may mean that the volume of the delay-critical UL data calculated as described above is equal to or greater than a certain data volume threshold. The certain data volume threshold may be zero or greater than zero. The certain data volume threshold may be configured for an LCH (or LCG). In other words, the parameter related to the priority change processing based on a certain condition may include the certain data volume threshold.

### 1.12.4. Condition (h3)

The controller 110 may determine whether the remaining time of an associated timer is below a certain threshold at a certain time point for the data buffered in an LCH (or an LCG). In a case where the remaining time of the associated timer is below the certain threshold, the controller 110 may select the second priority information for the LCH (or an LCH belonging to the LCG). In a case where the remaining time of the associated timer is not below the certain threshold, the controller 110 may select the first priority information for the LCH (or an LCH belonging to the LCG).

The certain time point may be at least one of time points (i1) to (i3) below.
(i1) Time point at which a new transmission is performed (i.e., a time point at which an LCP procedure is applied)
(i2) Time point at which a UL-SCH resource becomes available for a new transmission
(i3) Time point (for example, the first symbol) of the first PUSCH transmission including data from the LCH

The timer may be the first discard timer or the second discard timer.

The certain threshold may be configured for the LCH or the LCG. The base station apparatus 20 may transmit information related to the certain threshold to the terminal apparatus 10 by using at least one of an RRC message, a MAC CE, and DCI. The certain threshold may be remainingTimeThreshold used to trigger a DSR for the LCG. The certain threshold may be configured separately from remainingTimeThreshold.

For example, in a case where the value of the timer being the shortest among all the PDCP SDUs buffered in an LCH (or an LCG) is below the certain threshold at a certain time point, the controller 110 may select the second priority information for the LCH (or an LCH belonging to the LCG). Otherwise, the controller 110 may select the first priority information for the LCH (or an LCH belonging to the LCG).

### 1.12.5. Condition (h4)

The MAC entity may select either of the first priority information and the second priority information, based on an indication from the RLC layer and/or the PDCP layer, which is an upper layer. The MAC entity may select the second priority information for the LCH indicated by the RLC layer and/or the PDCP layer or an LCH belonging to the LCG indicated by the PDCP layer or the RLC layer.

For example, the PDCP entity may indicate, to a lower layer, which of the first priority information and the second priority information is to be selected, based on a certain timer associated with the LCH or the LCG and the threshold for the timer. For example, the PDCP entity may indicate to select the second priority information for the LCH or an LCH belonging to the LCG, based on the fact that the remaining time of a certain timer becomes below the threshold for the timer. The certain timer may be the first discard timer or the second discard timer. The threshold for the timer may be the certain threshold. For example, the threshold for the timer may be remainingTimeThreshold used to trigger a DSR for the LCG. The threshold for the timer may be configured separately from remainingTimeThreshold.

Similarly, the RLC entity may indicate, to a lower layer, which of the first priority information and the second priority information is to be selected, based on a certain timer associated with the LCH or the LCG and the threshold for the timer.

The PDCP entity may indicate, to a lower layer, selecting the second priority information, based on the presence of at least one of (f1) to (f5) above. The RLC entity may indicate, to a lower layer, selecting the second priority information, based on the presence of at least one of (g1) to (g3) above.

### 1.12.6. Condition (h5)

In a case where activation of PSI-based discarding processing for an DRB is indicated based on the MAC CE illustrated in FIG. 17, the controller 110 may select the second priority information for the LCH associated with the DRB.

In a case where deactivation of PSI-based discarding processing for an DRB is indicated based on the MAC CE illustrated in FIG. 17, the controller 110 may select the first priority information for the LCH associated with the DRB.

### 1.12.7. Combination of Conditions (h1) to (h5)

The controller 110 may select either of the first priority information and the second priority information, based on a combination of two or more of conditions (h1) to (h5). For example, in a case where a DSR is triggered for an LCG, the controller 110 may select the second priority information for an LCH belonging to the LCG. In a case where an LCH (or an LCG) does not have delay-critical UL data, the controller 110 may select the first priority information for the LCH (or an LCH belonging to the LCG).

### 1.12.8. Processing Flow

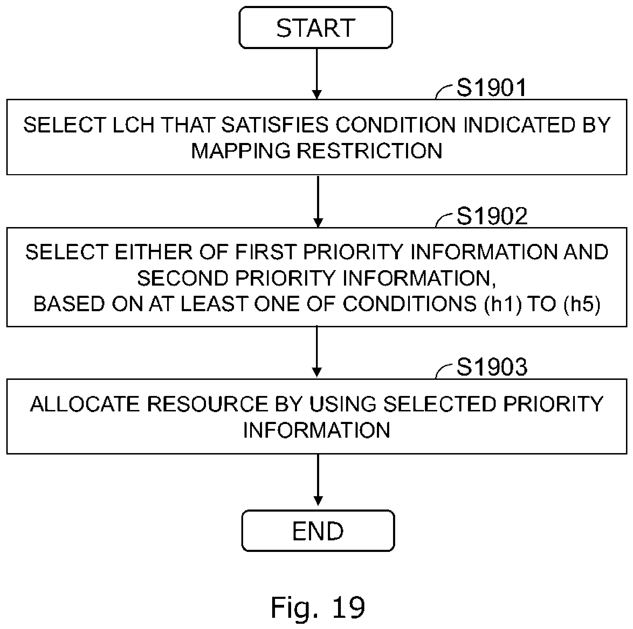

The terminal apparatus 10 may perform the LCP procedure as illustrated in FIG. 19. At the time of performing a new transmission, the controller 110 selects an LCH that satisfies the condition indicated by a mapping restriction (S1901). The controller 110 may select an LCH in accordance with Section 5.4.3.1.2 of NPL 1.

Next, the controller 110 selects either of the first priority information and the second priority information for the selected LCH, based on at least one of conditions (h1) to (h5) (S1902).

The controller 110 allocates a resource to the selected LCH by using the selected priority information (S1903). The controller 110 may execute processing (a1) to processing (a3) described above, by using the selected priority information. Thereafter, the communicator 120 executes transmission processing for the base station apparatus 20 by using the allocated resource.

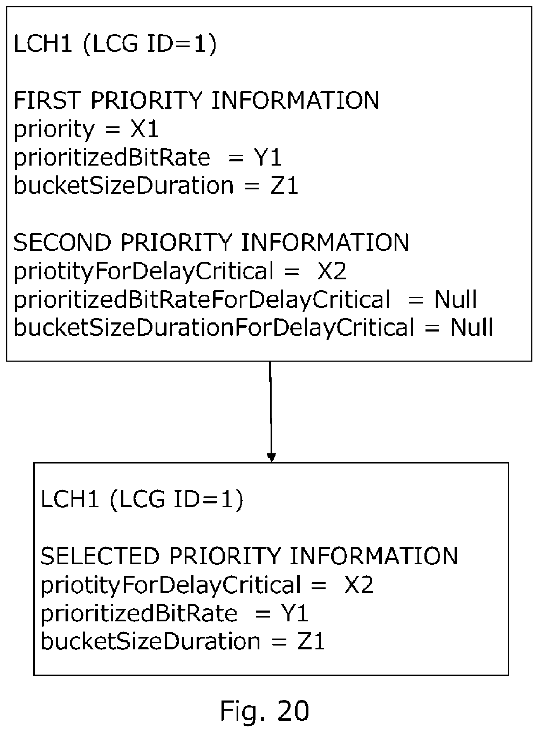

Note that, in a case where the second priority information includes a plurality of parameters, only part of the plurality of parameters may be configured. In this case, in step S1902, the controller 110 may select only the configured part of the parameters as the second priority information, based on at least one of conditions (h1) to (h5), and select the parameter(s) included in the first priority information, as a remaining parameter(s). As illustrated in FIG. 20, for LCH1, only priorityForDelayCritical is configured as the second priority information, and prioritizedBitRateForDelayCritical and bucketSizeDurationForDelayCritical are not configured. In this case, in a case where at least one of conditions (h1) to (h5) is satisfied, the controller 110 may select PriorityForDelayCritical configured as the second priority information and select PrioritizedBitRate and BucketSizeDuration configured as the first priority information.

### 1.12.9. Example of Priority Change

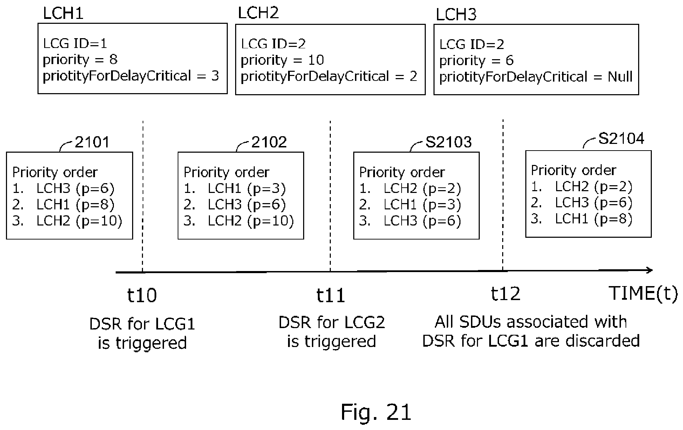

For example, the terminal apparatus 10 may select either of the first priority information and the second priority information as illustrated in FIG. 21, based on condition (h1). Note that, in the example of FIG. 21, the parameter priority is configured as the first priority information. The parameter priorityForDelayCritical is configured as the second priority information. LCH1 belongs to LCG1, and LCH2 and LCH3 belong to LCG2. The second priority information is configured for LCH1 and LCH2, and the second priority information is not configured for LCH3.

At a time point before time t10, the priority order of LCH1 to LCH3 is as illustrated in 2101. The priority order 2101 is determined based on the first priority information.

At time t10, a DSR for LCG1 is triggered. Accordingly, the controller 110 selects the second priority information for LCH1 belonging to LCG1. In contrast, the first priority information is continuously used for LCH2 and LCH3. Hence, the priority order of LCH1 to LCH3 is changed to 2102.

At time t11, a DSR for LCG2 is triggered. The controller 110 selects the second priority information for LCH2 belonging to LCG2. The second priority information is used for LCH1 and LCH2. In contrast, since the second priority information is not configured for LCH3, the controller 110 selects the first priority information for LCH3 belonging to LCG2. The priority order of LCH1 to LCH3 is changed to 2103.

At time t12, all SDUs associated with the DSR for LCG1 are discarded. The controller 110 selects the first priority information for LCH1 belonging to LCG1. The second priority information continues to be used for LCH2, and also the first priority information is used for LCH3. Hence, the priority order of LCH1 to LCH3 is changed to 2104.

### 1.12.10. Aspect 1-2

The second priority information need not be configured. For example, the terminal apparatus 10 may preferentially allocate resources to LCHs (or LCGs) satisfying at least one of conditions (h1) to (h5) in the LCP procedure.

Specifically, the terminal apparatus 10 may first allocate resources to the LCHs (or LCGs) satisfying at least one of the conditions (h1) to (h5) in descending order (decreasing order) of the priorities. Next, the terminal apparatus 10 may allocate resources to the LCHs (or LCGs) that do not satisfy at least one of conditions (h1) to (h5) in descending order of the priorities.

To be more specific, the MAC entity of the terminal apparatus 10 may execute processing (j1) to processing (j3) below.

(j1) For example, the MAC entity allocates resources to a plurality of LCHs selected for an uplink grant, the LCHs satisfying Bj > 0 and having delay-critical UL data, in descending order of the LCH priorities. Next, the MAC entity allocates resources to the LCHs selected for the uplink grant, the LCHs satisfying Bj > 0 and not having delay-critical UL data, in descending order of the LCH priorities. In a case where the PBR of an LCH is configured at infinity, the MAC entity allocates resources to all data that can be transmitted on the LCH before the PBR of an LCH with a lower LCH priority is satisfied.

(j2) The MAC entity decrements Bj by the total size of the MAC SDUs served to LCHj.

(j3) In a case where there are resources left, all the LCHs that are selected and have delay-critical UL data are served in descending order of the LCH priorities. Specifically, the MAC entity assigns the remaining data in all the LCHs that are selected and have delay-critical UL data, to the resources in descending order of the LCH priorities. In this case, regardless of the value of Bj, the MAC entity assigns the remaining data to the resources until either the data for the LCH or resources of the uplink grant is exhausted, whichever comes first. Next, all the LCHs that are selected and do not have delay-critical UL data are served in descending order of the LCH priorities. Specifically, the MAC entity assigns the remaining data in all the LCHs that are selected and do not have delay-critical UL data, to the resources in descending order of the LCH priorities. In this case, regardless of the value of Bj, the MAC entity assigns the remaining data to the resources until either the data for the LCH or resources of the uplink grant is exhausted, whichever comes first.

The above example is an example that condition (h2), which is an example of a certain condition, is applied to both processing (a1) and processing (a3), but this example is not restrictive. In the description of processing (j1) above, the portion describing "condition (h2) is satisfied" may be replaced with "at least one of conditions (h1) to (h5) is satisfied". In the description of processing (j1) above, the portion describing "condition (h2) is not satisfied" may be replaced with "at least one of conditions (h1) to (h5) is not satisfied".

Further, in the description of processing (j3) above, the portion describing "condition (h2) is satisfied" may be replaced with "at least one of conditions (h1) to (h5) is satisfied". In the description of processing (j3) above, the portion describing "condition (h2) is not satisfied" may be replaced with "at least one of conditions (h1) to (h5) is not satisfied".

Further, at least one of conditions (h1) to (h5) may be applied to either of (a1) and (a3). For example, in the description of processing (j1) above, the portion describing "condition (h2) is satisfied" may be replaced with "at least one of conditions (h1) to (h5) is satisfied". In the description of processing (j1) above, the portion describing "condition (h2) is not satisfied" may be replaced with "at least one of conditions (h1) to (h5) is not satisfied". Meanwhile, processing (j3) above may be replaced with processing (a3). In this way, a certain condition may be applied only to processing (a1).

In still another example, processing (j1) above may be replaced with processing (a1). In contrast, in the description of processing (j3) above, the portion describing "condition (h2) is satisfied" may be replaced with "at least one of conditions (h1) to (h5) is satisfied". In the description of processing (j3) above, the portion describing "condition (h2) is not satisfied" may be replaced with "at least one of conditions (h1) to (h5) is not satisfied". In this way, a certain condition may be applied only to processing (a3).

### 1.13. Aspect 2

The terminal apparatus 10 may perform mapping restriction based on at least one of conditions (h1) to (h5). Hereinafter, "mapping restriction based on at least one of conditions (h1) to (h5)" may be referred to as "mapping restriction based on a certain condition" for simplification of notation.

The base station apparatus 20 may transmit a parameter related to the mapping restriction based on a certain condition to the terminal apparatus 10. The base station apparatus 20 may transmit a parameter related to the mapping restriction based on a certain condition, by using at least one of an RRC message, a MAC CE, and DCI.

The parameter related to the mapping restriction based on a certain condition includes a parameter related to at least one of conditions (h1) to (h5) below. A parameter related to the mapping restriction based on a certain condition may be configured for an LCH. For example, a LogicalChannelConfig IE in the RRC message may include a parameter related to the mapping restriction based on a certain condition. The parameter related to the mapping restriction based on a certain condition may be configured for an LCG. For example, an IE related to the LCG in the RRC message may include the parameter related to the mapping restriction based on a certain condition. The parameter related to the mapping restriction based on a certain condition may be configured for a cell group. For example, a MAC-CellGroupConfig IE in the RRC message may include the parameter related to the mapping restriction based on a certain condition.

The parameter related to the mapping restriction based on a certain condition may include information explicitly or implicitly indicating whether or not the mapping restriction based on a certain condition is applied. The information may indicate "applying the mapping restriction based on a certain condition" or "disapplying the mapping restriction based on a certain condition". The information may be a flag indicating "applying the mapping restriction based on a certain condition" or "disapplying the mapping restriction based on a certain condition". Similarly to the above description, the information indicating whether or not to apply the mapping restriction based on a certain condition may be configured for an LCH, an LCG, or a cell group.

Note that, in a case where a parameter associated with at least one of conditions (h1) to (h5) is configured, this may implicitly indicate applying the mapping restriction based on a certain condition. For example, in a case where the above certain threshold is configured, this may implicitly indicate applying the mapping restriction based on a certain condition.

A plurality of aspects of the mapping restriction based on a certain condition will be described below.

### 1.13.1. Aspect 2-1

The controller 110 may allow mapping, based on at least one of conditions (h1) to (h5) being satisfied. For example, in a case where an LCH (or an LCG) satisfies at least one of conditions (h1) to (h5) at the time of performing a new transmission, the controller 110 may select the LCH (or LCG) for an uplink grant.

For example, condition (h2) may be applied as follows. In a case where an LCH (or an LCG) has delay-critical UL data, the controller 110 may select the LCH (or the LCG) for an uplink grant.

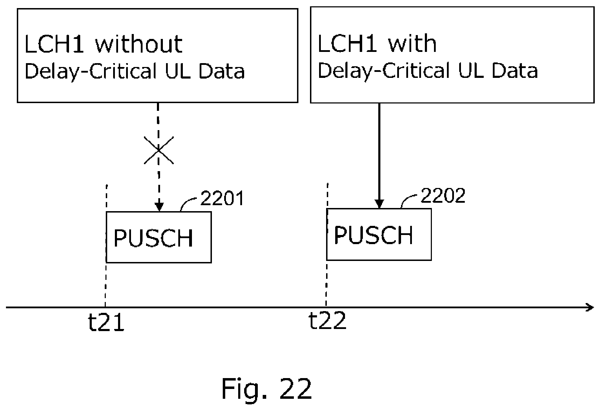

As illustrated in FIG. 22, at time t21, LCH1 does not have delay-critical UL data. Accordingly, the controller 110 does not allow mapping of LCH1 for PUSCH transmission 2201 corresponding to an uplink grant. Thereafter, at time t22, LCH1 includes delay-critical UL data. Accordingly, the controller 110 allows mapping of LCH1 for PUSCH transmission 2202 corresponding to an uplink grant.

For example, condition (h3) may be applied as follows. In a case where a remaining time of an associated timer becomes below at a certain time point for data buffered in an LCH (or an LCG), the controller 110 may select the LCH (or LCG) for an uplink grant. The timer may be the first discard timer or the second discard timer. The certain time point may be at least one of time points (i1) to (i3) above. The certain threshold may be remainingTimeThreshold or a threshold different from remainingTimeThreshold.

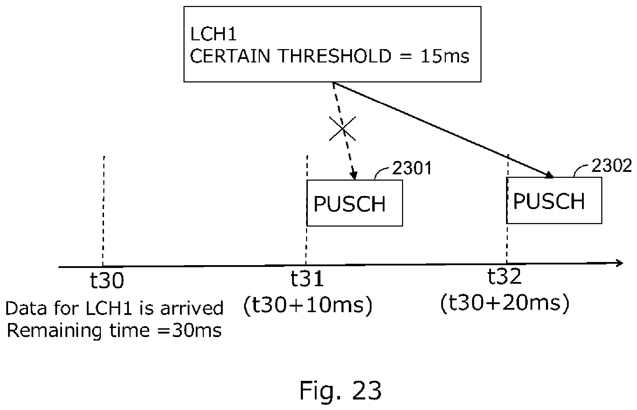

As illustrated in FIG. 23, it is assumed that a certain threshold (= 15 ms) is configured for LCH1. At time t30, data for LCH1 arrives. The remaining time of the timer associated with LCH1 is 30 ms. At time t30, which is 10 ms after time t31, the remaining time above does not become below the certain threshold. Accordingly, the controller 110 does not allow mapping of LCH1 for PUSCH transmission 2301 corresponding to an uplink grant. At time t32, which is 20 ms after time t30, the remaining time above becomes below the certain threshold. Accordingly, the controller 110 allows mapping of LCH1 for PUSCH transmission 2302 corresponding to an uplink grant.

According to the present aspect, it is possible to configure a condition for allowing mapping for each LCH (or LCG). Mapping for each LCH (or LCG) can be finely controlled.

### 1.13.2. Aspect 2-2

The controller 110 may restrict mapping, based on at least one of conditions (h1) to (h5) being satisfied. For example, in a case where an LCH (or an LCG) satisfies at least one of conditions (h1) to (h5) at the time of performing a new transmission, the controller 110 does not select a certain LCH (or LCG) for an uplink grant.

The certain LCH (or LCG) may be an LCH (or LCG) other than the LCH(s) (or LCG(s)) satisfying at least one of conditions (h1) to (h5). In other words, the certain LCH (or LCG) may be an LCH (or LCG) that does not satisfy any of conditions (h1) to (h5).

The certain LCH (or LCG) may be an LCH (or LCG) configured by using at least one of an RRC message, a MAC CE, and DCI. For example, the certain LCH (or LCG) may be an LCH (or LCG) configured by using a parameter included in the RRC message.

In the following example, it is assumed that the certain LCH (or LCG) is an LCH (or LCG) that does not satisfy at least one of conditions (h1) to (h5).

For example, condition (h2) may be applied as follows. In this case, the certain LCH (or LCG) may be an LCH (or LCG) that does not satisfy condition (h2). In a case where an LCH (or an LCG) does not have delay-critical UL data, the controller 110 may restrict mapping of the LCH (or LCG) for the uplink grant.

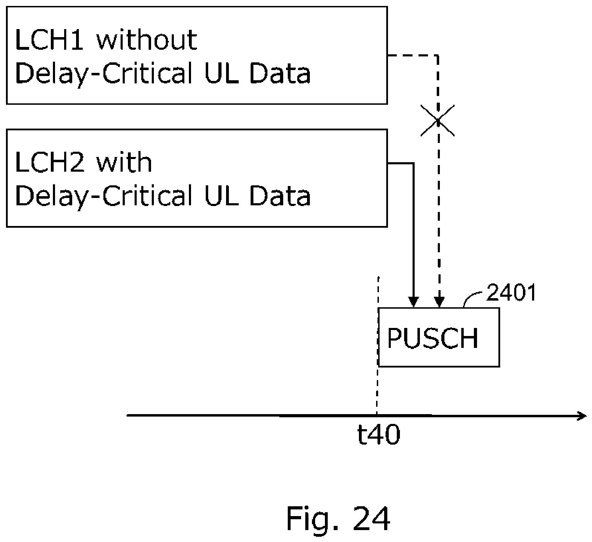

As illustrated in FIG. 24, at time t40, LCH1 does not have delay-critical UL data. LCH2 has delay-critical UL data. The controller 110 restricts mapping of LCH1 for PUSCH transmission 2401 corresponding to an uplink grant. Hence, the controller 110 may perform mapping of LCH2 for PUSCH transmission 2401 corresponding to an uplink grant.

For example, condition (h3) may be applied as follows. In this case, the certain LCH (or LCG) may be an LCH (or LCG) that does not satisfy condition (h3). In a case where a remaining time of an associated timer does not become below at a certain time point for data buffered in an LCH (or an LCG), the controller 110 may restrict mapping of the LCH (or LCG) for an uplink grant. The timer may be the first discard timer or the second discard timer. The certain time point may be at least one of time points (i1) to (i3) above. The certain threshold may be remainingTimeThreshold or a threshold different from remainingTimeThreshold.

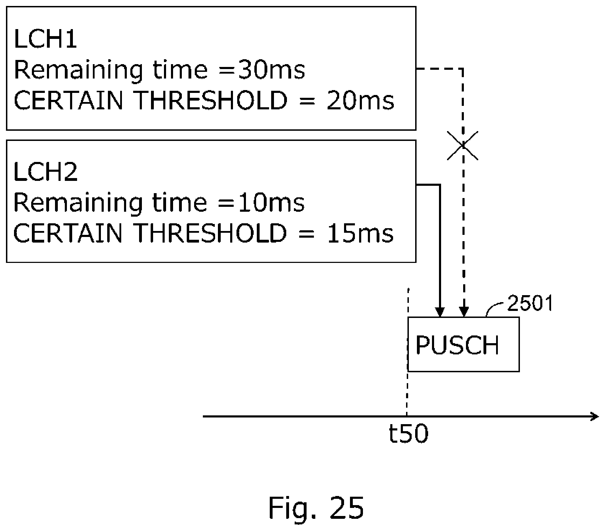

As illustrated in FIG. 25, it is assumed that a certain threshold (= 20 ms) is configured for LCH1 and a certain threshold (= 15 ms) is configured for LCH2. At time t50, the remaining time of the timer associated with LCH1 is 30 ms. The remaining time of the timer associated with LCH2 is 10 ms. The remaining time of the timer associated with LCH1 is not below the certain threshold. Accordingly, the controller 110 restricts mapping of LCH1 for PUSCH transmission 2501 corresponding to an uplink grant. In contrast, the remaining time of the timer associated with LCH2 is below the certain threshold. Hence, the controller 110 may perform mapping of LCH2 for PUSCH transmission 2501 corresponding to an uplink grant.

According to the present aspect, in a case where at least one of conditions (h1) to (h5) is configured for mapping restriction based on a certain condition, it is possible to restrict mapping for all LCHs (or LCGs) that do not satisfy the condition. It is possible to control mapping restriction with fewer configurations.

### 1.13.3. Processing Flow

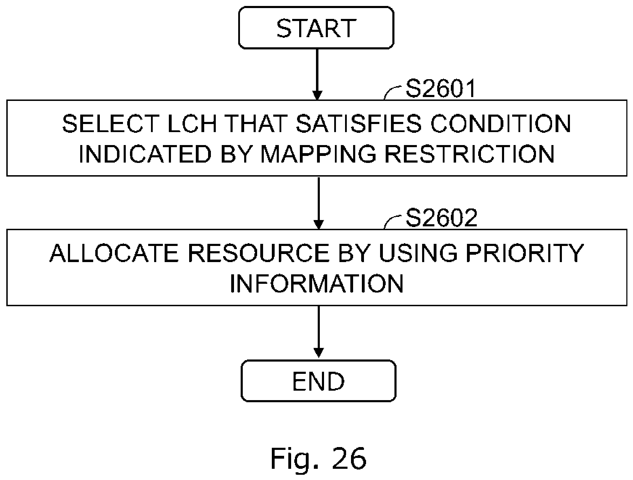

The terminal apparatus 10 may perform the LCP procedure as illustrated in FIG. 26. At the time of performing a new transmission, the controller 110 selects an LCH that satisfies the condition indicated by a mapping restriction (S2601). In a case where applying mapping restriction based on a certain condition is configured, the controller 110 may select an LCH according to aspect 2-1 or 2-2 above. In a case where disapplying mapping restriction based on a certain condition is configured, the controller 110 may select an LCH according to Section 5.4.3.1.2 of NPL 1.

The controller 110 allocates a resource to the selected LCH by using priority information (S2602). The priority information here may include priority, prioritizedBitRate, and bucketSizeDuration described above. The controller 110 may allocate resources in accordance with Section 5.4.3.1.3 of NPL 1.

### 1.14. Combination of Aspect 1 and Aspect 2

At least a part of aspect 1 above and at least a part of aspect 2 above may be combined. First, the terminal apparatus 10 may select an LCH according to aspect 2-1 or aspect 2-2 above. Next, for the selected LCH, the terminal apparatus 10 may allocate resources according to aspect 1-1 or aspect 1-2.

### 2. Alterations

Although the present disclosure is described according to the embodiments, it is understood that the present disclosure is not limited to the embodiments or the structures. The present disclosure includes various alterations and variations within the equivalent scope. Any other combination including one or more elements included in the embodiments is included in the gist or spirit scope of the present disclosure.

Expressions such as words and phrases used in the embodiments are merely examples, and may be replaced with substantially the same or similar expressions. Particularly, since the technique according to the embodiments relates to technical specifications, the expressions in the embodiments may be replaced with substantially the same or similar expressions in the technical specifications (for example, the technical specifications cited in the Specification of the present application).

The information transmitted/received in the embodiments may be transmitted/received in the same or a different message or the same or a different element as or from that already described in the technical specifications, or may be transmitted/received in a new message or element to be defined. The information transmitted/received in the embodiments may be transmitted/received using a different layer and/or a different channel from that of the embodiments.

The means and/or the functions provided by the apparatuses described in the embodiments can be provided by software stored in a tangible memory apparatus and a computer that executes the software, the software only, hardware only, or a combination of those. For example, when one of the apparatuses is provided by an electronic circuit being hardware, it can be provided by a digital circuit including a number of logic circuits or an analog circuit.

The apparatuses described in the embodiments execute a program stored in a non-transitory tangible storage medium. Execution of the program causes execution of a method corresponding to the program.

### 3. Supplementary Notes

The whole or part of the embodiments and the alterations may be described as the following supplementary notes, but the disclosure is not limited to the contents of the following supplementary notes. The following expresses relationships in which a supplementary note that depends upon a plurality of supplementary notes depends upon a supplementary note that depends upon a plurality of supplementary notes. All of the dependency relationships of the supplementary notes expressed below are included in the embodiments.

### (Supplementary Note A1)

A terminal apparatus (10) including:
a controller (110) configured to change a priority for a logical channel (LCH) based on a certain condition to allocate a resource to data of the LCH, in a logical channel prioritization (LCP) procedure; and
a communicator (120) configured to execute transmission processing to a base station apparatus (20) by using the resource allocated.

### (Supplementary Note A2)

The terminal apparatus according to supplementary note A1, wherein the controller is configured to select either of first priority information or second priority information for the LCH, based on the certain condition in the LCP procedure.

### (Supplementary Note A3)

The terminal apparatus according to supplementary note A2, wherein the controller is configured to
select, in a case where the certain condition is satisfied for an LCH or a logical channel group (LCG), the second priority information for the LCH or an LCH belonging to the LCG and
select, in a case where the certain condition is not satisfied for an LCH or an LCG, the first priority information for the LCH or an LCH belonging to the LCG.

### (Supplementary Note A4)

The terminal apparatus according to supplementary note A3, wherein
the certain condition includes a condition that delay status reporting (DSR) is triggered for an LCG, and
the controller is configured to select the second priority information for an LCH belonging to the LCG for which the DSR is triggered.

### (Supplementary Note A5)

The terminal apparatus according to supplementary note A3 or A4, wherein
the certain condition includes a condition that an LCH or an LCG includes delay-critical uplink data, and
the controller is configured to select the second priority information for the LCH including the delay-critical uplink data or an LCH belonging to the LCG including the delay-critical uplink data.

### (Supplementary Note A6)

The terminal apparatus according to any one of supplementary notes A3 to A5, wherein
the certain condition includes a condition that a timer associated with an LCH or an LCG becomes below a certain threshold at a certain time point, and
the controller is configured to select the second priority information for the LCH for which the timer becomes below the certain threshold or an LCH belonging to the LCG for which the timer becomes below the certain threshold.

### (Supplementary Note A7)

The terminal apparatus according to supplementary note A6, wherein the timer is
a packet data convergence protocol (PDCP) discard timer or
DiscardTimerForLowImportance, which is a discard timer used in data discard processing based on protocol data unit set importance (PSI).

### (Supplementary Note A8)

The terminal apparatus according to supplementary note A6 or A7, wherein the certain threshold is a threshold used to trigger delay status reporting (DSR).

### (Supplementary Note A9)

The terminal apparatus according to any one of supplementary notes A6 to A8, wherein the certain time point includes at least one of
a time point at which a new transmission is performed,
a time point at which an uplink shared channel (UL-SCH) resource becomes available for a new transmission, and
a time point of first physical uplink shared channel (PUSCH) transmission including data from an LCH.

### (Supplementary Note A10)

The terminal apparatus according to any one of supplementary notes A3 to A9, wherein
the certain condition includes a condition that an indication from a packet data convergence protocol (PDCP) layer or a radio link control (RLC) layer is received, and
the controller is configured to select the second priority information for an LCH indicated by the PDCP layer or the RLC layer or an LCH belonging to an LCG indicated by the PDCP layer or the RLC layer.

### (Supplementary Note A11)

The terminal apparatus according to any one of supplementary notes A3 to A10, wherein
the certain condition includes a condition that information for activating data discard processing based on protocol data unit set importance (PSI) is received, and
the controller is configured to select the second priority information for an LCH associated with a data radio bearer (DRB) for which the data discard processing based on the PSI is activated.

### (Supplementary Note A12)

The terminal apparatus according to any one of supplementary notes A2 to A11, wherein the communicator is configured to receive the first priority information and the second priority information from the base station apparatus.

### (Supplementary Note A13)

The terminal apparatus according to any one of supplementary notes A2 to A11, wherein
the communicator is configured to receive the first priority information and information related to an offset for the first priority information from the base station apparatus, and
the controller is configured to calculate the second priority information by using the first priority information and the information related to the offset.

### (Supplementary Note A14)

The terminal apparatus according to supplementary note A1, wherein the controller is configured to preferentially allocate a resource to data of an LCH satisfying the certain condition, in the LCP procedure.

### (Supplementary Note A15)

The terminal apparatus according to supplementary note A14, wherein
the certain condition includes a condition that delay status reporting (DSR) is triggered for a logical channel group (LCG), and
the controller is configured to preferentially allocate a resource to data of an LCH belonging to the LCG for which the DSR is triggered.

### (Supplementary Note A16)

The terminal apparatus according to supplementary note A14 or A15, wherein
the certain condition includes a condition that an LCH or a logical channel group (LCG) includes delay-critical uplink data, and
the controller is configured to preferentially allocate a resource to data of the LCH including the delay-critical uplink data or an LCH belonging to the LCG including the delay-critical uplink data.

### (Supplementary Note A17)

The terminal apparatus according to any one of supplementary notes A14 to A16, wherein
the certain condition includes a condition that a timer associated with an LCH or a logical channel group (LCG) becomes below a certain threshold at a certain time point, and
the controller is configured to preferentially allocate a resource to data of the LCH for which the timer becomes below the certain threshold or data of an LCH belonging to the LCG for which the timer becomes below the certain threshold.

### (Supplementary Note A18)

The terminal apparatus according to supplementary note A17, wherein the timer is
a packet data convergence protocol (PDCP) discard timer or
DiscardTimerForLowImportance, which is a discard timer used in data discard processing based on protocol data unit set importance (PSI).

### (Supplementary Note A19)

The terminal apparatus according to supplementary note A17 or A18, wherein the certain threshold is a threshold used to trigger delay status reporting (DSR).

### (Supplementary Note A20)

The terminal apparatus according to any one of supplementary notes A17 to A19, wherein the certain time point includes at least one of
a time point at which a new transmission is performed,
a time point at which an uplink shared channel (UL-SCH) resource becomes available for a new transmission, and
a time point of first physical uplink shared channel (PUSCH) transmission including data from an LCH.

### (Supplementary Note A21)

The terminal apparatus according to any one of supplementary notes A14 to A20, wherein
the certain condition includes a condition that an indication from a packet data convergence protocol (PDCP) layer or a radio link control (RLC) layer is received, and
the controller is configured to preferentially allocate a resource to data of an LCH indicated by the PDCP layer or the RLC layer or data of an LCH belonging to an LCG indicated by the PDCP layer or the RLC layer.

### (Supplementary Note A22)

The terminal apparatus according to any one of supplementary notes A14 to A21, wherein
the certain condition includes a condition that information for activating data discard processing based on protocol data unit set importance (PSI) is received, and
the controller is configured to preferentially allocate a resource to data of an LCH associated with a data radio bearer (DRB) for which the data discard processing based on the PSI is activated.

### (Supplementary Note A23)

A method for a terminal apparatus (10) including:
changing a priority for a logical channel (LCH) based on a certain condition to allocate a resource to data of the LCH, in a logical channel prioritization (LCP) procedure; and
executing transmission processing to a base station apparatus (20) by using the resource allocated.

### (Supplementary Note A24)

A program causing a processor (101) in a terminal apparatus (10) to execute:
changing a priority for a logical channel (LCH) based on a certain condition to allocate a resource to data of the LCH, in a logical channel prioritization (LCP) procedure; and
executing transmission processing to a base station apparatus (20) by using the resource allocated.

### (Supplementary Note A25)

A non-transitory tangible storage medium having recorded thereon a program causing a processor (101) in a terminal apparatus (10) to execute:
changing a priority for a logical channel (LCH) based on a certain condition to allocate a resource to data of the LCH, in a logical channel prioritization (LCP) procedure; and
executing transmission processing to a base station apparatus (20) by using the resource allocated.

### (Supplementary Note A26)

A terminal apparatus (10) including:
a controller (110) configured to allow or restrict mapping of a logical channel (LCH), based on a certain condition to allocate a resource to data of the LCH, in a logical channel prioritization (LCP) procedure; and
a communicator (120) configured to execute transmission processing to a base station apparatus (20) by using the resource allocated.

### (Supplementary Note A27)

The terminal apparatus according to supplementary note A26, wherein the controller is configured to select, in a case where a certain condition is satisfied for an LCH or a logical channel group (LCG), the LCH or an LCH belonging to the LCG, for an uplink grant.

### (Supplementary Note A28)

The terminal apparatus according to supplementary note A27, wherein
the certain condition includes a condition that delay status reporting (DSR) is triggered for an LCG, and
the controller is configured to select an LCH belonging to the LCG for which the DSR is triggered, for the uplink grant.

### (Supplementary Note A29)

The terminal apparatus according to supplementary note A27 or A28, wherein
the certain condition includes a condition that a timer associated with an LCH or an LCG becomes below a certain threshold at a certain time point, and
the controller is configured to select the LCH for which the timer becomes below the certain threshold or an LCH belonging to the LCG for which the timer becomes below the certain threshold, for the uplink grant.

### (Supplementary Note A30)

The terminal apparatus according to supplementary note A29, wherein the timer is
a packet data convergence protocol (PDCP) discard timer or
DiscardTimerForLowImportance, which is a discard timer used in data discard processing based on protocol data unit set importance (PSI).

### (Supplementary Note A31)

The terminal apparatus according to supplementary note A29 or A30, wherein the certain threshold is a threshold used to trigger delay status reporting (DSR).

### (Supplementary Note A32)

The terminal apparatus according to any one of supplementary notes A29 to A31, wherein the certain time point includes at least one of
a time point at which a new transmission is performed,
a time point at which an uplink shared channel (UL-SCH) resource becomes available for a new transmission, and
a time point of first physical uplink shared channel (PUSCH) transmission including data from an LCH.

### (Supplementary Note A33)

The terminal apparatus according to any one of supplementary notes A27 to A32, wherein
the certain condition includes a condition that an indication from a packet data convergence protocol (PDCP) layer or a radio link control (RLC) layer is received, and
the controller is configured to select an LCH indicated by the PDCP layer or the RLC layer or an LCH belonging to an LCG indicated by the PDCP layer or the RLC layer, for the uplink grant.

### (Supplementary Note A34)

The terminal apparatus according to any one of supplementary notes A27 to A33, wherein
the certain condition includes a condition that information for activating data discard processing based on protocol data unit set importance (PSI) is received, and
the controller is configured to select an LCH associated with a data radio bearer (DRB) for which the data discard processing based on the PSI is activated, for the uplink grant.

### (Supplementary Note A35)

The terminal apparatus according to supplementary note A26, wherein the controller is configured not to select, in a case where a certain condition is satisfied for an LCH or a logical channel group (LCG), a certain LCH or LCG for an uplink grant.

### (Supplementary Note A36)

The terminal apparatus according to supplementary note A35, wherein the certain LCH or LCG is an LCH or LCG for which the certain condition is not satisfied.

### (Supplementary Note A37)

The terminal apparatus according to supplementary note A35 or A36, wherein the certain condition includes a condition that delay status reporting (DSR) is triggered for an LCG.

### (Supplementary Note A38)

The terminal apparatus according to any one of supplementary notes A35 to A37, wherein
the certain condition includes a condition that a timer associated with an LCH or an LCG becomes below a certain threshold at a certain time point.

### (Supplementary Note A39)

The terminal apparatus according to supplementary note A38, wherein the timer is
a packet data convergence protocol (PDCP) discard timer or
DiscardTimerForLowImportance, which is a discard timer used in data discard processing based on protocol data unit set importance (PSI).

### (Supplementary Note A40)

The terminal apparatus according to supplementary note A38 or A39, wherein the certain threshold is a threshold used to trigger delay status reporting (DSR).

### (Supplementary Note A41)

The terminal apparatus according to any one of supplementary notes A38 to A40, wherein the certain time point includes at least one of
a time point at which a new transmission is performed,
a time point at which an uplink shared channel (UL-SCH) resource becomes available for a new transmission, and
a time point of first physical uplink shared channel (PUSCH) transmission including data from an LCH.

### (Supplementary Note A42)

The terminal apparatus according to any one of supplementary notes A35 to A41, wherein
the certain condition includes a condition that an indication from a packet data convergence protocol (PDCP) layer or a radio link control (RLC) layer is received.

### (Supplementary Note A43)

The terminal apparatus according to any one of supplementary notes A35 to A42, wherein
the certain condition includes a condition that information for activating data discard processing based on protocol data unit set importance (PSI) is received.

### (Supplementary Note A44)

A method for a terminal apparatus (10) including:
allowing or restricting mapping of a logical channel (LCH), based on a certain condition to allocate a resource to data of the LCH, in a logical channel prioritization (LCP) procedure; and
executing transmission processing to a base station apparatus (20) by using the resource allocated.

### (Supplementary Note A45)

A program causing a processor (101) in a terminal apparatus (10) to execute:
allowing or restricting mapping of a logical channel (LCH), based on a certain condition to allocate a resource to data of the LCH, in a logical channel prioritization (LCP) procedure; and
executing transmission processing to a base station apparatus (20) by using the resource allocated.

### (Supplementary Note A46)

A non-transitory tangible storage medium having recorded thereon a program causing a processor (101) in a terminal apparatus (10) to execute:
allowing or restricting mapping of a logical channel (LCH), based on a certain condition to allocate a resource to data of the LCH, in a logical channel prioritization (LCP) procedure; and
executing transmission processing to a base station apparatus (20) by using the resource allocated.

### (Supplementary Note B1)

A terminal apparatus (10) including:
a receiver (122) configured to receive, from a base station apparatus (20), a radio resource control (RRC) message including first information for configuring a priority for a logical channel (LCH); and
a controller (110) configured to perform a logical channel prioritization (LCP) procedure, wherein
the controller is configured to determine the priority for the LCH, based on either of the first information or second information for configuring the priority for the LCH, according to a threshold for a certain timer.

### (Supplementary Note B2)

The terminal apparatus according to supplementary note B1, wherein the controller is configured to
determine, in a case where the second information is included in the RRC message, the priority for the LCH, based on either of the first information or the second information and
determine, in a case where the second information is not included in the RRC message, the priority for the LCH, based on the first information.

### (Supplementary Note B3)

The terminal apparatus according to supplementary note B1 or B2, wherein
the receiver is configured to receive an RRC message including third information from the base station,
the third information includes at least one of information for configuring a prioritized bit rate (prioritizedBitRate (PBR)) for the LCH and information for configuring a bucket size duration (bucketSizeDuration (BSD)) for the LCH,
the controller is configured to determine at least one of the PBR and the BSD for the LCH, based on either of the third information or fourth information, according to the threshold for the certain timer, and
the fourth information includes at least one of information for configuring the PBR for the LCH and information for configuring the BSD for the LCH.

### (Supplementary Note B4)

The terminal apparatus according to any one of supplementary notes B1 to B3, wherein the controller is configured to allocate a resource to the LCH, based on the priority determined for the LCH in the LCP procedure.

### (Supplementary Note B5)

The terminal apparatus according to any one of supplementary notes B1 to B4, wherein the controller is configured to
determine, in a case where the LCH has certain data, the priority for the LCH, based on the second information and
determine, in a case where the LCH does not have the certain data, the priority for the LCH, based on the first information.

### (Supplementary Note B6)

The terminal apparatus according to supplementary note B5, wherein
the certain data is associated with the certain timer, and
the certain data is data with a remaining time of the certain timer becoming below the threshold for the certain timer at a certain opportunity.

### (Supplementary Note B7)

The terminal apparatus according to supplementary note B6, wherein the certain opportunity includes at least one of
a time of performing a new transmission,
a time of applying the LCP procedure,
a time when an uplink shared channel (UL-SCH) resource becomes available for a new transmission, and
a time of transmitting a physical uplink shared channel (PUSCH) including data of the LCH.

### (Supplementary Note B8)

The terminal apparatus according to any one of supplementary notes B1 to B7, wherein the certain timer is
a packet data convergence protocol (PDCP) discard timer or
DiscardTimerForLowImportance, which is a discard timer used in data discard processing based on protocol data unit set importance (PSI).

### (Supplementary Note B9)

The terminal apparatus according to any one of supplementary notes B1 to B8, wherein the receiver is configured to receive, from the base station apparatus, an RRC message including information for configuring the threshold for the certain timer for the LCH.

### (Supplementary Note B10)

A method for a terminal apparatus (10), the method including:
receiving, from a base station apparatus, a radio resource control (RRC) message including first information for configuring a priority for a logical channel (LCH); and
performing a logical channel prioritization (LCP) procedure, wherein
the performing the LCP procedure includes
determining the priority for the LCH, based on either of the first information or second information for configuring the priority for the LCH, according to a threshold for a certain timer.

### (Supplementary Note B11)

The method according to supplementary note B10, wherein
the determining the priority for the LCH includes
determining, in a case where the second information is included in the RRC message, the priority for the LCH, based on either of the first information or the second information and
determining, in a case where the second information is not included in the RRC message, the priority for the LCH, based on the first information.

### (Supplementary Note B12)

The method according to supplementary note B10 or B11, wherein the method further includes
receiving an RRC message including third information from the base station,
the third information including at least one of information for configuring a prioritized bit rate (prioritizedBitRate (PBR)) for the LCH and information for configuring a bucket size duration (bucketSizeDuration (BSD)) for the LCH, and
the method further includes
determining at least one of the PBR and the BSD for the LCH, based on either of the third information or fourth information, according to the threshold for the certain timer,
the fourth information including at least one of information for configuring the PBR for the LCH and information for configuring the BSD for the LCH.

### (Supplementary Note B13)

The method according to any one of supplementary notes B10 to B12, wherein the method further includes
allocating a resource to the LCH, based on the priority determined for the LCH in the LCP procedure.

### (Supplementary Note B14)

The method according to any one of supplementary notes B10 to B13, wherein
the determining the priority for the LCH includes
determining, in a case where the LCH has certain data, the priority for the LCH, based on the second information and
determining, in a case where the LCH does not have the certain data, the priority for the LCH, based on the first information.

### (Supplementary Note B15)

The method according to supplementary note B14, wherein
the certain data is associated with the certain timer, and
the certain data is data with a remaining time of the certain timer becoming below the threshold for the certain timer at a certain opportunity.

### (Supplementary Note B16)

The method according to supplementary note B15, wherein the certain opportunity includes at least one of
a time of performing a new transmission,
a time of applying the LCP procedure,
a time when an uplink shared channel (UL-SCH) resource becomes available for a new transmission, and
a time of transmitting a physical uplink shared channel (PUSCH) including data of the LCH.

### (Supplementary Note B17)

The method according to any one of supplementary notes B10 to B16, wherein the certain timer is
a packet data convergence protocol (PDCP) discard timer or
DiscardTimerForLowImportance, which is a discard timer used in data discard processing based on protocol data unit set importance (PSI).

### (Supplementary Note B18)

The method according to any one of supplementary notes B10 to B17, wherein the method further includes
receiving, from the base station apparatus, an RRC message including information for configuring the threshold for the certain timer for the LCH.

### (Supplementary Note B19)

A base station apparatus (20) including
a transmitter (221) configured to transmit, to a terminal apparatus (10), a radio resource control (RRC) message including first information for configuring a priority for a logical channel (LCH), wherein
in a logical channel prioritization (LCP) procedure, the priority for the LCH is determined based on either of the first information or second information for configuring the priority for the LCH, according to a threshold for a certain timer.

### (Supplementary Note B20)

The base station apparatus according to supplementary note B19, wherein
the priority for the LCH is determined based on either of the first information or the second information in a case where the second information is included in the RRC message, and
the priority for the LCH is determined based on the first information in a case where the second information is not included in the RRC message.

### (Supplementary Note B21)

The base station apparatus according to supplementary note B19 or B20, wherein
the transmitter is configured to transmit an RRC message including third information to the terminal apparatus,
the third information includes at least one of information for configuring a prioritized bit rate (prioritizedBitRate (PBR)) for the LCH and information for configuring a bucket size duration (bucketSizeDuration (BSD)) for the LCH,
at least one of the PBR and the BSD for the LCH is determined based on either of the third information or fourth information, according to the threshold for the certain timer,
the fourth information includes at least one of information for configuring the PBR for the LCH and information for configuring the BSD for the LCH.

### (Supplementary Note B22)

The base station apparatus according to any one of supplementary notes B19 to B21, wherein a resource is allocated to the LCH, based on the priority determined for the LCH in the LCP procedure.

### (Supplementary Note B23)

The base station apparatus according to any one of supplementary notes B19 to B22, wherein
in a case where the LCH has certain data, the priority for the LCH, is determined based on the second information, and
in a case where the LCH does not have the certain data, the priority for the LCH is determined based on the first information.

### (Supplementary Note B24)

The base station according to supplementary note B23, wherein
the certain data is associated with the certain timer, and
the certain data is data with a remaining time of the certain timer becoming below the threshold for the certain timer at a certain opportunity.

### (Supplementary Note B25)

The base station apparatus according to supplementary note B24, wherein the certain opportunity includes at least one of
a time of performing a new transmission,
a time of applying the LCP procedure,
a time when an uplink shared channel (UL-SCH) resource becomes available for a new transmission, and
a time of transmitting a physical uplink shared channel (PUSCH) including data of the LCH.

### (Supplementary Note B26)

The base station apparatus according to any one of supplementary notes B19 to B25, wherein the certain timer is
a packet data convergence protocol (PDCP) discard timer or
DiscardTimerForLowImportance, which is a discard timer used in data discard processing based on protocol data unit set importance (PSI).

### (Supplementary Note B27)

The base station apparatus according to any one of supplementary notes B19 to B26, wherein the transmitter is configured to transmit, to the terminal apparatus, an RRC message including information for configuring the threshold for the certain timer for the LCH.

The disclosure contents of the above-mentioned related art documents and reference literature are incorporated herein by reference.

## Claims

1. A terminal apparatus (10) comprising:
a receiver (122) configured to receive, from a base station apparatus (20), a radio resource control (RRC) message including first information for configuring a priority for a logical channel (LCH); and
a controller (110) configured to perform a logical channel prioritization (LCP) procedure, wherein
the controller is configured to determine the priority for the LCH, based on either of the first information or second information for configuring the priority for the LCH, according to a threshold for a certain timer.

2. The terminal apparatus according to claim 1, wherein the controller is configured to
determine, in a case where the second information is included in the RRC message, the priority for the LCH, based on either of the first information or the second information and
determine, in a case where the second information is not included in the RRC message, the priority for the LCH, based on the first information.

3. The terminal apparatus according to claim 1 or 2, wherein
the receiver is configured to receive an RRC message including third information from the base station,
the third information includes at least one of information for configuring a prioritized bit rate (prioritizedBitRate (PBR)) for the LCH and information for configuring a bucket size duration (bucketSizeDuration (BSD)) for the LCH,
the controller is configured to determine at least one of the PBR and the BSD for the LCH, based on either of the third information or fourth information, according to the threshold for the certain timer, and
the fourth information includes at least one of information for configuring the PBR for the LCH and information for configuring the BSD for the LCH.

4. The terminal apparatus according to any one of claims 1 to 3, wherein the controller is configured to allocate a resource to the LCH, based on the priority determined for the LCH in the LCP procedure.

5. The terminal apparatus according to any one of claims 1 to 4, wherein the controller is configured to
determine, in a case where the LCH has certain data, the priority for the LCH, based on the second information and
determine, in a case where the LCH does not have the certain data, the priority for the LCH, based on the first information.

6. The terminal apparatus according to claim 5, wherein
the certain data is associated with the certain timer, and
the certain data is data with a remaining time of the certain timer becoming below the threshold for the certain timer at a certain opportunity.

7. The terminal apparatus according to claim 6, wherein the certain opportunity includes at least one of
a time of performing a new transmission,
a time of applying the LCP procedure,
a time when an uplink shared channel (UL-SCH) resource becomes available for a new transmission, and
a time of transmitting a physical uplink shared channel (PUSCH) including data of the LCH.

8. The terminal apparatus according to any one of claims 1 to 7, wherein the certain timer is
a packet data convergence protocol (PDCP) discard timer or
DiscardTimerForLowImportance, which is a discard timer used in data discard processing based on protocol data unit set importance (PSI).

9. The terminal apparatus according to any one of claims 1 to 8, wherein the receiver is configured to receive, from the base station apparatus, an RRC message including information for configuring the threshold for the certain timer for the LCH.

10. A method for a terminal apparatus (10), the method comprising:
receiving, from a base station apparatus, a radio resource control (RRC) message including first information for configuring a priority for a logical channel (LCH); and
performing a logical channel prioritization (LCP) procedure, wherein
the performing the LCP procedure includes
determining the priority for the LCH, based on either of the first information or second information for configuring the priority for the LCH, according to a threshold for a certain timer.

11. The method according to claim 10, wherein
the determining the priority for the LCH includes
determining, in a case where the second information is included in the RRC message, the priority for the LCH, based on either of the first information or the second information and
determining, in a case where the second information is not included in the RRC message, the priority for the LCH, based on the first information.

12. The method according to claim 10 or 11, wherein the method further includes
receiving an RRC message including third information from the base station,
the third information including at least one of information for configuring a prioritized bit rate (prioritizedBitRate (PBR)) for the LCH and information for configuring a bucket size duration (bucketSizeDuration (BSD)) for the LCH, and
the method further includes
determining at least one of the PBR and the BSD for the LCH, based on either of the third information or fourth information, according to the threshold for the certain timer,
the fourth information including at least one of information for configuring the PBR for the LCH and information for configuring the BSD for the LCH.

13. The method according to any one of claims 10 to 12, wherein the method further includes
allocating a resource to the LCH, based on the priority determined for the LCH in the LCP procedure.

14. The method according to any one of claims 10 to 13, wherein
the determining the priority for the LCH includes
determining, in a case where the LCH has certain data, the priority for the LCH, based on the second information and
determining, in a case where the LCH does not have the certain data, the priority for the LCH, based on the first information.

15. The method according to claim 14, wherein
the certain data is associated with the certain timer, and
the certain data is data with a remaining time of the certain timer becoming below the threshold for the certain timer at a certain opportunity.

16. The method according to claim 15, wherein the certain opportunity includes at least one of
a time of performing a new transmission,
a time of applying the LCP procedure,
a time when an uplink shared channel (UL-SCH) resource becomes available for a new transmission, and
a time of transmitting a physical uplink shared channel (PUSCH) including data of the LCH.

17. The method according to any one of claims 10 to 16, wherein the certain timer is
a packet data convergence protocol (PDCP) discard timer or
DiscardTimerForLowImportance, which is a discard timer used in data discard processing based on protocol data unit set importance (PSI).

18. The method according to any one of claims 10 to 17, wherein the method further includes
receiving, from the base station apparatus, an RRC message including information for configuring the threshold for the certain timer for the LCH.

19. A base station apparatus (20) comprising
a transmitter (221) configured to transmit, to a terminal apparatus (10), a radio resource control (RRC) message including first information for configuring a priority for a logical channel (LCH), wherein
in a logical channel prioritization (LCP) procedure, the priority for the LCH is determined based on either of the first information or second information for configuring the priority for the LCH, according to a threshold for a certain timer.

20. The base station apparatus according to claim 19, wherein
the priority for the LCH is determined based on either of the first information or the second information in a case where the second information is included in the RRC message, and
the priority for the LCH is determined based on the first information in a case where the second information is not included in the RRC message.

21. The base station apparatus according to claim 19 or 20, wherein
the transmitter is configured to transmit an RRC message including third information to the terminal apparatus,
the third information includes at least one of information for configuring a prioritized bit rate (prioritizedBitRate (PBR)) for the LCH and information for configuring a bucket size duration (bucketSizeDuration (BSD)) for the LCH,
at least one of the PBR and the BSD for the LCH is determined based on either of the third information or fourth information, according to the threshold for the certain timer,
the fourth information includes at least one of information for configuring the PBR for the LCH and information for configuring the BSD for the LCH.

22. The base station apparatus according to any one of claims 19 to 21, wherein a resource is allocated to the LCH, based on the priority determined for the LCH in the LCP procedure.

23. The base station apparatus according to any one of claims 19 to 22, wherein
in a case where the LCH has certain data, the priority for the LCH, is determined based on the second information, and
in a case where the LCH does not have the certain data, the priority for the LCH is determined based on the first information.

24. The base station according to claim 23, wherein
the certain data is associated with the certain timer, and
the certain data is data with a remaining time of the certain timer becoming below the threshold for the certain timer at a certain opportunity.

25. The base station apparatus according to claim 24, wherein the certain opportunity includes at least one of
a time of performing a new transmission,
a time of applying the LCP procedure,
a time when an uplink shared channel (UL-SCH) resource becomes available for a new transmission, and
a time of transmitting a physical uplink shared channel (PUSCH) including data of the LCH.

26. The base station apparatus according to any one of claims 19 to 25, wherein the certain timer is
a packet data convergence protocol (PDCP) discard timer or
DiscardTimerForLowImportance, which is a discard timer used in data discard processing based on protocol data unit set importance (PSI).

27. The base station apparatus according to any one of claims 19 to 26, wherein the transmitter is configured to transmit, to the terminal apparatus, an RRC message including information for configuring the threshold for the certain timer for the LCH.
